# EUROPEAN PATENT APPLICATION

(11) **EP 4 811 919 A1**
(43) Date of publication of application: **23.09.2026**
(21) Application number: 23958648.0
(22) Date of filing: 17.11.2023
(51) Int. Cl.: H04W 74/08

(54) **METHOD AND APPARATUS USED IN NODE FOR WIRELESS COMMUNICATION**

(71) Applicant: Quectel Wireless Solutions Co., Ltd., Shanghai 201601 (CN)
(72) Inventor: ZHAO, Zheng, Shanghai 201601 (CN)
(74) Representative: Fish & Richardson P.C.
(86) International application number: PCT/CN2023/132410
(87) International publication number: WO 2025/102375

(57) **Abstract**

Disclosed are methods and devices in a node for wireless communication, which helps to determine uplink timing in a PRACH transmission including multiple preamble repetitions. The method includes: receiving a first timing advance command (TAC) on a first slot, where the first TAC is used for determining a first uplink timing adjustment, a first condition is used for determining whether the first uplink timing adjustment is used for a first uplink transmission; a first physical random access channel (PRACH) transmission includes a plurality of preamble repetitions, and the first uplink transmission comprises at least one preamble repetition of the plurality of preamble repetitions of the first PRACH transmission.

## Description

### TECHNICAL FIELD

The present disclosure relates to the field of communication technologies, and in particular, to methods and devices in a node for wireless communication.

### BACKGROUND

In order to enhance the coverage performance of random access, some communication systems (e.g., the new radio (NR) system) plan to introduce multiple physical random access channel (PRACH) transmissions, i.e., repeated transmissions of multiple PRACH preambles (preamble repetitions). In multiple PRACH transmissions, multiple random access channel occasions (ROs) occupied by the multiple PRACH preambles may span a relatively long period in the time domain. Within this time span, a timing advance command (TAC) received by a node may result in different timing advances corresponding to the multiple PRACH preambles. Furthermore, when multiple PRACH transmissions conflict with other uplink transmissions, it may be necessary to abandon (drop) the transmission of some PRACH preambles. Therefore, there is an urgent need to solve the problem of how to implement uplink timing adjustment in multiple PRACH transmissions.

### SUMMARY

Embodiments of the present disclosure provide methods and devices in a node for wireless communication. Aspects involved in the present disclosure are described below.

In a first aspect, some embodiments of the present disclosure provide a method in a first node for wireless communication. The method includes: receiving a first timing advance command (TAC) on a first slot, where the first TAC is used for determining a first uplink timing adjustment, a first condition is used for determining whether the first uplink timing adjustment is used for a first uplink transmission, a first physical random access channel (PRACH) transmission includes a plurality of preamble repetitions, and the first uplink transmission includes at least one preamble repetition of the plurality of preamble repetitions of the first PRACH transmission.

In a second aspect, some embodiments of the present disclosure provide a method in a second node for wireless communication. The method includes: transmitting a first timing advance command (TAC) on a first slot, where the first TAC is used for determining a first uplink timing adjustment, and a first condition is used for determining whether the first uplink timing adjustment is used for a first uplink transmission, a first physical random access channel (PRACH) transmission includes a plurality of preamble repetitions, and the first uplink transmission includes at least one preamble repetition of the plurality of preamble repetitions of the first PRACH transmission.

In a third aspect, some embodiments of the present disclosure provide a first node for wireless communication, including: a first receiver, configured to receive a first timing advance command (TAC) on a first slot, where the first TAC is used for determining a first uplink timing adjustment, and a first condition is used for determining whether the first uplink timing adjustment is used for a first uplink transmission; a first physical random access channel (PRACH) transmission includes a plurality of preamble repetitions, and the first uplink transmission includes at least one preamble repetition of the plurality of preamble repetitions of the first PRACH transmission.

In a fourth aspect, some embodiments of the present disclosure provide a second node for wireless communication, including: a second transmitter, configured to transmit a first timing advance command (TAC) on a first slot, where the first TAC is used for determining a first uplink timing adjustment, and a first condition is used for determining whether the first uplink timing adjustment is used for a first uplink transmission; a first physical random access channel (PRACH) transmission includes a plurality of preamble repetitions, and the first uplink transmission includes at least one preamble repetition of the plurality of preamble repetitions of the first PRACH transmission.

In a fifth aspect, some embodiments of the present disclosure provide a first node for wireless communication, including a transceiver, a memory, and a processor. The memory is configured to one or more computer programs, and the processor is configured to call the programs in the memory and control the transceiver to receive or send a signal to cause the first node to implement the method as described in the first aspect.

In a sixth aspect, some embodiments of the present disclosure provide a second node for wireless communication, including a transceiver, a memory, and a processor. The memory is configured to store one or more computer programs, and the processor is configured to call the programs in the memory and control the transceiver to receive or send a signal to cause the second node to implement the method as described in the second aspect.

In a seventh aspect, some embodiments of the present disclosure further provide a communication system, including the foregoing first node and/or the second node. In another possible implementation, the system may further include other devices that interact with the first or second node in the solutions provided in the embodiments of the present disclosure.

In an eighth aspect, some embodiments of the present disclosure further provide a computer-readable storage medium having a program stored thereon, and the program causes a computer to implement part or all of the operations of the methods as described in the above aspects.

In a ninth aspect, some embodiments of the present disclosure further provide a computer program product including a non-transitory computer-readable storage medium storing a computer program, where the computer program is operable to cause a computer to implement part or all of the operations of the methods as described in the above aspects. In some implementations, the computer program product may be a software installation package.

In a tenth aspect, some embodiments of the present disclosure provide a chip, including a memory and a processor. The processor is configured to call and run a computer program from the memory to implement part or all of the operations of the methods as described in the above aspects.

In some embodiments of the present disclosure, after receiving the first TAC and determining the first uplink timing adjustment, the first node determines, based on the first condition, whether the first uplink timing adjustment is used to determine the transmission timing of at least one preamble repetition in the first PRACH transmission, which helps to avoid different transmission timings for multiple preamble repetitions in the first PRACH transmission. It can be seen that the first node can effectively determine the transmission timing adjustment for multiple preamble repetitions in a PRACH transmission with multiple preamble repetitions. That is, the first node can determine the transmission timing adjustment of uplink transmission for a PRACH transmission with multiple preamble repetitions.

In some embodiments of the present disclosure, within the time span of the first PRACH transmission with multiple preamble repetitions, if the received first TAC takes effect, the first node can determine whether the first uplink timing adjustment is applied to the first uplink transmission based on either the effective slot of the first TAC or the number of preamble repetitions in the first uplink transmission. It can be seen that the first node can effectively balance resource utilization efficiency and the accuracy of timing adjustments.

In some embodiments of the present disclosure, the first uplink transmission includes at least one preamble repetition of the first PRACH transmission with multiple preamble repetitions. It can be seen that the first node can effectively transmit the multiple preamble repetitions in a PRACH transmission with multiple preamble repetitions.

In some embodiments of the present disclosure, even if the first node receives the first TAC, it can ensure that the uplink timing of the multiple preamble repetitions in the first PRACH transmission is the same. This is not only helps to improve the performance gain of multiple PRACH transmissions and expand the coverage, but also helps to reduce random access delay and improve the utilization efficiency of random access resources.

### BRIEF DESCRIPTION OF THE DRAWINGS

FIG. 1 is a schematic diagram of a system architecture of a wireless communication system according to some embodiments of the present disclosure.
FIG. 2 is a comparison diagram of PRACH occasion sets with different time spans.
FIG. 3 is a schematic diagram illustrating one scenario of transmission timing change in a PRACH transmission with multiple preamble repetitions.
FIG. 4 is a schematic diagram illustrating another scenario of transmission timing change in a PRACH transmission with multiple preamble repetitions.
FIG. 5 is a schematic diagram illustrating a conflict between a PRACH transmission with multiple preamble repetitions and other uplink transmissions.
FIG. 6 is a schematic flow chart of a method in a first node for wireless communication according to some embodiments of the present disclosure.
FIG. 7 is a schematic diagram of several preamble formats that may correspond to at least one preamble repetition in the method of FIG. 6.
FIG. 8 is a schematic flow chart of one possible implementation of the method shown in FIG. 6.
FIG. 9 is a schematic diagram of another possible implementation of the method shown in FIG. 6.
FIG. 10 is a schematic diagram of yet another possible implementation of the method shown in FIG. 6.
FIG. 11 is a schematic flow chart of still another possible implementation of the method shown in FIG. 6.
FIG. 12 is a schematic block diagram of a first node for wireless communication according to some embodiments of the present disclosure.
FIG. 13 is a schematic block diagram of a second node for wireless communication according to some embodiments of the present disclosure.
FIG. 14 is a schematic diagram of a device according to some embodiments of the present disclosure.
FIG. 15 is a schematic diagram of a hardware module of a communication device according to some embodiments of the present disclosure.

### DETAILED DESCRIPTION OF THE EMBODIMENTS

### Communication System Architecture

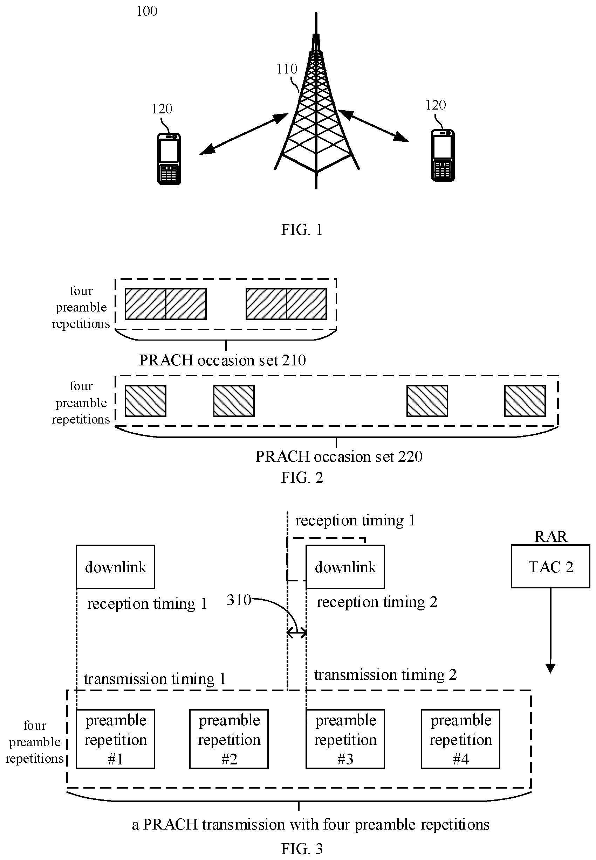

FIG. 1 is a schematic diagram of a system architecture of a wireless communication system 100 according to some embodiments of the present disclosure. The wireless communication system 100 may include a network device 110 and user equipment (UE) 120. The network device 110 may be a device in communication with the user equipment 120. The network device 110 may provide communication coverage for a specific geographic area and communicate with the user equipment 120 located within that coverage area.

FIG. 1 schematically illustrates one network device and two user equipments (UEs), and optionally, the wireless communication system 100 may include multiple network devices, with other numbers of user equipment within the coverage of each network device; the embodiments of the present disclosure are not limited thereto.

Optionally, the wireless communication system 100 may further include other network entities such as a network controller, a mobility management entity, and the embodiments of the present disclosure are not limited to this.

It should be understood that the technical solution of the embodiments of the present disclosure may be applied to various communication systems, for example: the fifth generation (5G) system or new radio (NR) system, long term evolution (LTE) system, LTE frequency division duplex (FDD) system, LTE time division duplex (TDD) system, and so on. The technical solutions provided by the present disclosure may also be applied to future communication systems, such as the sixth generation mobile communication system, satellite communication system, and so on.

The user equipment in the embodiments of the present disclosure may also be called terminal equipment, access terminal, user unit, user station, mobile station (MS), mobile terminal (MT), remote station, remote terminal, mobile device, user terminal, terminal, wireless communication device, user agent, or user device. The user equipment in the embodiments of the present disclosure may be a device that provides voice and/or data connectivity to users, and may be used to connect people, objects, and machines, such as handheld devices with wireless connection functions, vehicle-mounted devices and the like. Examples of the user equipment in the embodiments of the present disclosure include a mobile phone, a tablet computer (Pad), a notebook computer, a palmtop computer, a mobile internet device (MID), wearable devices, virtual reality (VR) devices, augmented reality (AR) devices, wireless terminals in industrial control, wireless terminals in self driving, wireless terminals in remote medical surgery, wireless terminals in smart grids, wireless terminals in transportation safety, wireless terminals in smart cities, and wireless terminals in smart homes. Optionally, the UE may act as a base station. For example, in scenarios such as vehicle-to-everything (V2X) or device-to-device (D2D), the UE may act as a scheduling entity that provides sidelink signals between UEs. For instance, a cellular telephone and a vehicle may communicate with each other using sidelink signals, or a cellular telephone may communicate with a smart home device without relaying communication signals through a base station.

The network device in the embodiments of the present disclosure may be a device for communicating with a user equipment. The network device may also be referred to as an access network device or a wireless access network device, such as a base station. The network device in the embodiments of the present disclosure may be a radio access network (RAN) node (or a device) that enables terminal devices to access a wireless network. A base station may be broadly referred to by or replaced with various names, such as: Node B (NodeB), evolved Node B (eNB), next generation Node B (gNB), relay station, access point, transmitting and receiving point (TRP), transmitting point (TP), master eNB (MeNB), secondary eNB (SeNB), multi-standard radio (MSR) node, home base station, network controller, access node, wireless node, access point (AP), transmission node, transceiver node, baseband unit (BBU), remote radio unit (RRU), active antenna unit (AAU), remote radio head (RRH), central unit (CU), distributed unit (DU), positioning node and so on. A base station may be a macro base station, micro base station, relay node, donor node or the like, or a combination thereof. The base station may also refer to a communication module, modem, or chip disposed in the aforementioned apparatus or device. Additionally, the base station may also be a mobile switching center, a device bearing base station functions in a device-to-device(D2D), vehicle-to-everything (V2X), or machine-to-machine (M2M) communication, a network-side device in a 6G network, a device bearing base station functions in future communication systems, and so on. A base station may support networks with the same or different access technologies. The embodiments of the present disclosure do not limit the specific technology or specific device form adopted by the network device.

A base station may be fixed or mobile. For example, a helicopter or unmanned aerial vehicle may be configured to act as a mobile base station, with one or more cells movable according to the location of the mobile base station. In other examples, a helicopter or unmanned aerial vehicle may be configured to act as a device communicating with another base station.

In some deployments, the network device in the embodiments of the present disclosure may refer to a CU or a DU, or may include a CU and a DU. A gNB may also include an AAU.

Network devices and terminal devices may be deployed on land (including indoor or outdoor, handheld or vehicle-mounted, on water, or airborne aircraft, balloons, or satellites). The embodiments of the present disclosure do not limit the scenarios where network devices and terminal devices are deployed.

It should be understood that all or part of the functions of the communication device in the present disclosure may also be implemented by software functions running on hardware, or by virtualized functions instantiated on a platform (e.g., a cloud platform).

It should be understood that the explanation of terminology in the embodiments of the present disclosure may refer to the 3rd Generation Partnership Project (3GPP) specifications, e.g., the TS36 series, TS37 series, and TS38 series, and may also refer to the specifications of the Institute of Electrical and Electronics Engineers (IEEE).

### Coverage Enhancement of PRACH Transmission

The coverage performance of a communication system (e.g., an NR system) is an important factor for operators to consider during the commercial deployment of the communication networks. This is because the coverage performance of the communication system directly affects the service quality of the communication system and the cost of the operator, such as capital expenditure (CAPEX) and operating expense (OPEX).

The coverage performance of the communication system varies with the frequency band in which it operates. For example, compared with LTE systems, NR systems may operate in a higher frequency band (e.g., millimeter wave bands), resulting in greater path loss when operating in such bands; thus, NR systems have relatively poor coverage performance at high frequency bands. Therefore, as the communication systems support increasingly higher frequency bands, how to enhance their coverage has become a critical issue to address.

In most practical deployment scenarios, since user equipment has weaker capabilities compared to network equipment, the coverage performance of the uplink (UL) is a bottleneck for coverage enhancement of the communication system. With the development of communication technologies, uplink services in some emerging vertical use cases are gradually increasing (e.g., video uploading services). In scenarios with a large volume of uplink services, how to enhance uplink coverage remains an issue to be addressed.

In the related technologies, coverage enhancement solutions already exist for certain uplink channels. For example, NR Release 17 (Rel-17) has introduced coverage enhancement schemes for the Physical Uplink Shared Channel (PUSCH), Physical Uplink Control Channel (PUCCH), and Message 3 (Msg3) in the random access process.

However, Rel-17 does not provide a coverage enhancement scheme for PRACH, yet PRACH transmission performance is crucial for many procedures, such as initial access and beam failure recovery; thus, enhancing PRACH coverage is also highly important. Based on this, 3GPP approved Proposal RP-221858, formally establishing a work item (WI) entitled "Further NR Coverage Enhancements" in NR Rel-18, where enhancing PRACH transmission coverage performance is one of the key topics of this work item.

In some embodiments, multiple PRACH transmissions (i.e., PRACH transmissions with multiple repetitions) may be applied to enhance PRACH coverage. Specifically, performance gains for PRACH transmission may be achieved through PRACH preamble repetitions (e.g., transmitting multiple preambles over multiple ROs, respectively). For example, to improve PRACH transmission coverage performance, a PRACH transmission with multiple preamble repetitions will be introduced in NR Release 18 (Rel-18).

As a possible implementation, the UE may transmit multiple preamble repetitions using the same beam. For example, in this technical feature, the UE may transmit, over multiple resources, a PRACH format for multiple preamble repetitions, using the same transmit spatial filter (Tx spatial filter), i.e., the same transmit beam.

As a possible implementation, for a PRACH transmission with multiple preamble repetitions, a PRACH occasion set is associated with the same Synchronization Signal/Physical Broadcast Channel Block index (SS/PBCH block index, SSB index). The PRACH occasion set includes multiple valid PRACH occasions and may also be referred to as an RO (RACH occasion) set. The multiple valid ROs in the set are time-continuous and use the same frequency resources in the frequency domain. The number of valid ROs in the set is configured by a higher layer and may be 2, 4, or 8.

As a possible implementation, the PRACH occasion set is configured or determined within a time period X, and the configured or determined PRACH occasion set repeats in units of the time period X. The time period X includes K SSB-to-RO association pattern periods.

Further, if one or more preamble repetitions in a PRACH transmission with multiple preamble repetitions are dropped due to resource collision, the dropped preamble repetitions are no longer transmitted in a delayed manner. For example, if the resources of the PRACH occasion set are network-configured, the UE may give up transmitting some or all preamble repetitions when the PRACH transmission conflicts with other uplink transmissions.

In some embodiments, for a PRACH transmission with multiple preamble repetitions, some PRACH occasion sets may have a large time span, even up to the order of 10 milliseconds (ms). For example, when configuring the PRACH occasion set, factors such as resource configuration of PRACH occasions, RO validity requirements, and association constraints with SSB indices may result in a large time gap between multiple ROs within the PRACH occasion set.

For ease of understanding, the time spans of different PRACH occasion sets are illustrated below with reference to FIG. 2. FIG. 2 shows two PRACH occasion sets, namely PRACH occasion set 210 and PRACH occasion set 220.

Referring to FIG. 2, each of the two PRACH occasion sets include four preamble repetitions. By comparing the two PRACH occasion sets, it can be seen that the time-domain positions of four preamble repetitions in PRACH occasion set 210 are relatively close, while the time span of the four preamble repetitions in PRACH occasion set 220 is relatively long (i.e., the time span is too long).

When the time span of a PRACH occasion set is very long (e.g., PRACH occasion set 220 in FIG. 2), the propagation delay of the UE within this time span is likely to change. For example, for a moving UE, when the time span of the PRACH occasion set is longer, the propagation delay may change significantly as the UE moves.

Due to the change in the propagation delay, the timing advance (TA) of the uplink transmission of the UE may need to be adjusted. The uplink transmission may include preamble repetitions in PRACH transmission.

### Uplink Timing

In a communication system, a UE may adjust an uplink timing of uplink transmission after receiving a TAC or a downlink transmission. For example, in an NR system, if a downlink timing received by a UE changes, the UE may adjust a timing advance for uplink transmission. Similarly, if a UE receives a TAC for a timing advance group (TAG), the UE may adjust the timing advance for uplink transmission based on the TAC.

As mentioned above, the uplink timing for the UE to transmit preamble repetitions is also affected by propagation delay. If the UE receives a new TAC or a downlink transmission with changed downlink timing within the time span of a PRACH occasion set, the transmission timings of multiple preamble repetitions transmitted in that PRACH occasion set may differ.

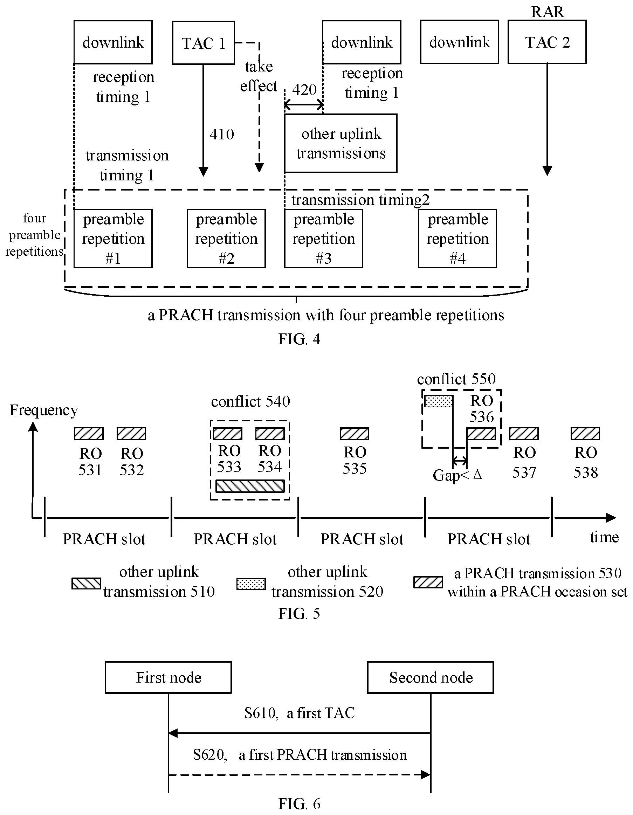

For ease of understanding, two scenarios of uplink transmission timing changes are illustrated below by taking a PRACH transmission with 4 preamble repetitions as an example, in conjunction with FIGS. 3 and 4. The 4 preamble repetitions in the PRACH transmission shown in FIGS. 3 and 4 are preamble repetition #1 to preamble repetition #4, respectively. In FIG. 3, the transmission timing (tx timing) of the preamble repetitions changes due to a change in the reception timing (rx timing) of the downlink transmission. In FIG. 4, the transmission timing of the preamble repetitions changes due to the reception of a TAC.

In FIGS. 3 and 4, without TAC or downlink influence, the transmission timings of the four preamble repetitions may all be determined based on the same downlink (DL) reception timing. For example, transmission timing 1 of each of preamble repetition #1 to preamble repetition #4 is the same as downlink reception timing 1.

However, the reception timing of the downlink transmission may change. Time period 310 in FIG. 3 represents a time offset between an original downlink timing and an actual downlink timing. Due to this time offset, the downlink timing at which the UE receives the downlink transmission changes from reception timing 1 to reception timing 2. As shown in FIG. 3, time period 310 affects the transmission timing of preamble repetition #3, causing the uplink timing of preamble repetition #3 to change from transmission timing 1 to transmission timing 2. It can be seen that in this PRACH transmission, at least the transmission timings of preamble repetition #1 and preamble repetition #3 are different.

In contrast to FIG. 3, the UE in FIG. 4 receives a valid TAC1 during PRACH transmission. Information 410 indicated by TAC1 may include a new TA or an offset value of TA. Information 410 may be used for determining the time offset between the UE's transmission timing and downlink reception timing, i.e., time period 420. When information 410 indicates a new TA, time period 420 is equal to the new TA. When information 410 indicates an offset value of TA, time period 420 is the sum of the original TA and the offset value.

As can be seen from FIG. 4, preamble repetitions #3 and #4 transmitted by the UE occur after TAC1 takes effect; thus, the transmission timings of these two preamble repetitions are no longer transmission timing 1 of preamble repetition #1. As shown in FIG. 4, under the influence of time period 420, the uplink timing of preamble repetition #3 changes from transmission timing 1 to transmission timing 2. It can be seen that in this PRACH transmission, the transmission timings of at least preamble repetition #1 and preamble repetition #3 are no longer the same.

In addition, since the set of PRACH occasions occupied by a PRACH transmission with multiple preamble repetitions may have a large time span, the probability of such a PRACH transmission conflicting with other uplink transmissions is significantly increased. Further, a single PRACH transmission with multiple preamble repetitions may conflict with multiple other uplink transmissions. As mentioned above, when such a PRACH transmission conflicts with other uplink transmissions, the UE has to abandon the transmission of all or part of the preamble repetitions, as shown in FIG. 5.

FIG. 5 is an example of a conflict between a PRACH transmission and other uplink transmissions (other UL tx). There are three types of uplink transmissions exist on the time-frequency resources shown in FIG. 5, namely other uplink transmission 510, other uplink transmission 520, and PRACH transmission 530 within a PRACH occasion set.

As can be seen from FIG. 5, PRACH transmission 530 transmits preamble repetitions through eight ROs in the PRACH occasion set. The eight ROs are RO531, RO532, ..., RO538 respectively. The time-domain resources of PRACH transmission 530 are configured in units of PRACH slots. For example, the first PRACH slot in FIG. 5 includes two ROs.

Referring to FIG. 5, the transmission of preamble repetitions on RO533 and RO534 conflicts with other uplink transmission 510 (conflict 540). Specifically, in conflict 540, the PRACH transmission and other uplink transmission 510 occupy the same time-domain resources. In this scenario, the UE may have to abandon (drop) transmitting preamble repetitions on RO533 and RO534.

Conflict 550 in FIG. 5 occurs because the time interval (gap) between RO536 and other uplink transmission 520 is small. As shown in FIG. 5, the time interval between the end time of the other uplink transmission 520 and the start time of RO536 is less than a certain parameter (i.e., Gap < Δ). In this case, the UE may have to abandon transmitting the preamble repetition on RO536.

Two scenarios where transmission timings of multiple preamble repetitions differ in PRACH transmission have been described above with reference to FIGS. 3 and 4, and FIG. 5 illustrates the scenarios where multiple preamble repetitions in the PRACH transmission may be dropped due to conflict. In related technologies, when a UE transmits preamble repetitions to a base station (e.g., eNB/gNB) through PRACH transmission, the base station may detect the preamble repetitions and send a random access response (RAR). For example, the RAR may be the RAR shown in FIGS. 3 and 4. Typically, the RAR includes a TAC (e.g., TAC2 in FIGS. 3 and 4). The TAC is used to indicate to the UE the timing advance amount required for uplink transmission.

However, when the transmission timings of multiple preamble repetitions in one PRACH transmission differ, the detection of the preamble repetitions by the base station, the transmission of the RAR, and the timing adjustment of the UE may be affected.

For example, in this scenario, when a base station (gNB/eNB) detects multiple preamble repetitions, there is no unified reception timing, and combined detection of these preamble repetitions may cause interference issues.

For example, in this scenario, even if the base station may detect a timing advance and send an RAR containing a TAC to the UE, without special indication, the UE cannot confirm which preamble repetition the TAC is based for the detected timing advance, and thus fails to perform effective timing adjustment.

Further, if the preamble repetition transmitted on a fixed RO is used as a reference for timing adjustment, the base station cannot calculate the timing advance based on the preamble repetition on the RO when the preamble repetition on the RO is dropped or not detected by the base station.

In conclusion, PRACH transmissions with multiple preamble repetitions can enhance the coverage of an NR system. However, for such PRACH transmissions with multiple preamble repetitions, determining the timing advance for uplink transmission remains a technical challenge to address. In particular, when the transmission timings of multiple preamble repetitions in such PRACH transmissions with multiple preamble repetitions differ, determining the transmission timing for uplink transmission becomes an urgent technical issue requiring resolution.

Furthermore, to avoid different transmission timings of multiple preamble repetitions caused by a TAC, when a TAC is received within the time span of a PRACH transmission with multiple preamble repetitions, how to determine the uplink transmission timing and the transmission timing of a preamble repetition are both technical challenges to be addressed.

Furthermore, since transmission of part of the preamble repetitions is abandoned, or the base station fails to receive all actually transmitted preamble repetitions, how to indicate which preamble repetition the TAC in the RAR refers to also constitutes a technical problem that needs to be addressed.

It should be noted that the uplink timing issues mentioned above-including uplink timing changes caused by TACs and uplink timing issues due to uplink transmission conflicts within the time span of a PRACH transmission with multiple preamble repetitions-are merely examples. Embodiments of the present disclosure are applicable to any scenario where multiple preamble repetitions in a PRACH transmission have inconsistent transmission timings or transmission failures.

Based on this, embodiments of the present disclosure provide methods and devices for a node in wireless communication. In this method, when a first node (e.g., a UE) transmits at least one preamble repetition within a time span of a first PRACH transmission, if the first node receives a first TAC and an effective time of the first TAC falls within this time span, the first node may determine, according to a first condition, whether the first TAC is used for determining a transmission timing of the preamble repetition. With this method, even if the first node receives an effective TAC within the time span of the first PRACH transmission, it can ensure that the uplink timings of multiple preamble repetitions are the same, thereby improving random access efficiency.

In some embodiments, the PRACH transmission with multiple preamble repetitions mentioned in the embodiments of the present disclosure may refer to multiple PRACH transmissions using the same beam, to obtain a signal-to-noise ratio gain by repeatedly transmitting PRACH on the same beam. In other embodiments, the multiple PRACH transmissions referred to herein may be multiple PRACH transmissions using different beams, to obtain diversity gain by repeatedly transmitting PRACH on different beams.

It should be noted that the term "beam" in the embodiments of the present disclosure may include or be replaced by at least one of the following: physical beam, logical beam, spatial filter, spatial parameter, spatial domain filter, spatial domain transmission filter, spatial domain reception filter, or antenna port.

The embodiments of the present disclosure may be applied to an initial access process or a beam failure recovery process. Taking the initial access procedure as an example, the embodiments of the present disclosure may be applied to a four-step random access process (i.e., random access process type-1), or a two-step random access process (i.e., random access process type-2), and the embodiments of the present disclosure are not limited to this.

The embodiments of the method of the present disclosure are described in detail below with reference to the accompanying drawings. FIG. 6 is a schematic flow chart of a method in a first node for wireless communication according to some embodiments of the present disclosure. The method shown in FIG. 6 is described from the perspective of the interaction between the first node and the second node.

In some embodiments, the first node may be a network-controlled repeater (NCR).

In some embodiments, the first node may be a user equipment, for example, the user equipment 120 shown in FIG. 1.

In some embodiments, the first node may be a relay, such as a relay terminal.

In some embodiments, the second node may be a network device, for example, the network device 110 shown in FIG. 1.

In some embodiments, the second node may be a base station (gNB/eNB).

In some embodiments, the second node may be a cell.

The method shown in FIG. 6 includes operations S610 and S620, herein operation S620 is a dashed line indicating that the execution sequence of the operation is optional, or the operation is optional. The operations shown in FIG. 6 are described below.

In S610, the first node receives a first TAC transmitted by the second node. As mentioned above, TAC represents a timing advance command, and the first TAC refers to the first timing advance command.

The first node may receive the first TAC on the first slot. That is, the first node may receive the first TAC on the first slot. Correspondingly, the second node sends the first TAC on the first slot.

In some embodiments, the first slot is an uplink slot. For example, the first slot is an uplink slot n.

In some embodiments, the first slot is a downlink slot. For example, the first slot is a downlink slot where the second slot transmits the first TAC or carries the information/channel of the first TAC.

In some embodiments, the first slot is a sidelink slot. For example, the second node may be another user equipment that interacts with the user equipment (the first node). The first node and the second node perform sidelink communication.

In some embodiments, the first slot is the last one among the one or more uplink slots that overlap in time with physical downlink shared channel (PDSCH) reception slots. That is, the first slot is a slot where an uplink slot overlaps with a downlink slot. On this slot, the first node may receive the first TAC sent by the second node.

In some embodiments, when the subcarrier spacing changes, the uplink slot and the downlink slot may overlap.

In some embodiments, since the uplink slot and the downlink slot are not fully aligned, the uplink slot and the downlink slot may overlap.

In some embodiments, the first slot is a downlink slot, the first slot is used by the first node to receive the first TAC.

In some embodiments, the first slot is one or more slots; alternatively, the first slot is a slot where multiple consecutive symbols are located. For example, the first slot is the slot where the time-domain resource occupied by the first TAC is located. The time-domain resource occupied by the first TAC may be one or more consecutive slots, or one or more consecutive symbols.

The first TAC is used for determining a first uplink timing adjustment. The first uplink timing adjustment is used by the first node for uplink transmission after the first TAC takes effect. Exemplarily, the first uplink timing adjustment is used for part or all of the uplink transmissions that occur after the effective time of the first TAC and before other uplink timing adjustments.

In some embodiments, the first TAC includes a first TA or a first offset value. The first TA or the first offset value is used for determining a first uplink timing adjustment. For example, the first TAC may be TAC1 in FIG. 4.

In some embodiments, the first TAC includes a positive integer number of bits.

In some embodiments, the first TA is different from the TA used by the first node for its current uplink transmission.

In some embodiments, the first offset value represents the time offset between the first TA and the current TA of the first node.

In some embodiments, the first TAC is used for determining the uplink transmission timing of the first node.

In some embodiments, the first TA or the first offset value is used for updating the current transmission timing.

In some embodiments, the first uplink timing adjustment may be associated with the first TA or the first offset value.

In some embodiments, the first uplink timing adjustment is an *N_{TA}* value.

In some embodiments, the first uplink timing adjustment is indicated by *T_{TA},* and the first TAC includes *T_{TA}.*

In some embodiments, the difference between the first TA and the current TA (original TA) of the first node may be the first uplink timing adjustment. In other words, the first offset value may be the first uplink timing adjustment. For example, the first uplink timing adjustment is the time period 420 in FIG. 4.

In some embodiments, the first uplink timing adjustment is a change of the uplink timing relative to the current uplink timing. Herein, the current uplink timing may be the uplink timing of the first node before the received first TAC takes effect. Exemplarily, the current uplink timing may be the uplink timing of the first node that is not adjusted accordingly based on the first uplink timing adjustment.

In some embodiments, the uplink timing determined according to the first uplink timing adjustment is different from the current uplink timing.

In some embodiments, "uplink timing" may be replaced with "transmission timing". Exemplarily, the uplink timing adopted by the first node may be the transmission timing at which the first node currently performs uplink transmission.

In some embodiments, the first transmission timing is the current uplink timing, the second transmission timing is the uplink timing, and the first uplink timing adjustment is the difference between the second transmission timing and the first transmission timing. For example, the current uplink timing is the current TA of the first node, the second transmission timing is the first TA in the first TAC, and the first uplink timing adjustment is the difference between the first TA and the current TA.

The first uplink timing adjustment may be used for uplink transmissions of the first node. The first uplink timing adjustment used for an uplink transmission means that the transmission timing of the uplink transmission is determined according to the first uplink timing adjustment. In the embodiments of the present disclosure, the first uplink timing adjustment may not be used for all uplink transmissions of the first node so as to prevent the first uplink timing adjustment from affecting some communication services.

In some embodiments, the uplink transmissions of the first node may include a first uplink transmission and a second uplink transmission. After the first node determines the first uplink timing adjustment, the transmission timings of the first uplink transmission and the second uplink transmission may be determined in different ways, respectively, so as to meet the actual transmission requirements of different uplink transmissions.

In some embodiments, after the first node determines the first uplink timing adjustment, it needs to determine whether the uplink transmission whose transmission timing is determined based on the first uplink timing adjustment is the first uplink transmission, and the uplink transmission whose transmission timing is directly determined based on the first uplink timing adjustment is the second uplink transmission. In other words, the first uplink timing adjustment is used for the second uplink transmission, whereas whether the first uplink timing adjustment is used for the first uplink transmission depends on whether certain conditions are satisfied.

In some embodiments, the first uplink timing adjustment used for the second uplink transmission means that the second uplink transmission adopts the second transmission timing.

In some embodiments, the first uplink timing adjustment used for the second uplink transmission means that the uplink timing adopted by the second uplink transmission has changed relative to the current uplink timing.

In some embodiments, the first uplink timing adjustment is used for the second uplink transmission out of the first uplink transmission and the second uplink transmission. When the first node needs to transmit the first uplink transmission and the second uplink transmission, the first uplink timing adjustment is only used for the second uplink transmission.

In some embodiments, the first uplink timing adjustment used for the second uplink transmission out of the first uplink transmission and the second uplink transmission means that the second uplink transmission adopts the second transmission timing, while the first uplink transmission adopts the first transmission timing.

In some embodiments, the first uplink timing adjustment used for the second uplink transmission out of the first uplink transmission and the second uplink transmission means that the uplink timing adopted by the second uplink transmission has changed relative to the current uplink timing, while the first uplink transmission maintains the current uplink timing.

In some embodiments, the uplink timing adopted by the second uplink transmission is determined based on the first uplink timing adjustment, whereas the uplink timing adopted by the first uplink transmission is not necessarily determined based on the first uplink timing adjustment. Exemplarily, the transmission timing of the second uplink transmission may be adjusted accordingly based on the first uplink timing adjustment, while the transmission timing of the first uplink transmission may be adjusted based on the first uplink timing adjustment or may remain the current uplink timing unchanged.

In some embodiments, the first uplink transmission maintaining the current uplink timing unchanged may also be replaced with maintaining the transmission timing of the first uplink transmission. That is to say, after receiving the first TAC, the first node may keep the transmission timing of the first uplink transmission unchanged and only change the transmission timing of the second uplink transmission according to the first uplink timing adjustment.

In some embodiments, the first uplink timing adjustment used for the second uplink transmission out of the first uplink transmission and the second uplink transmission means that the second uplink transmission adopts the second transmission timing, while the first uplink transmission adopts either the first transmission timing or the second transmission timing.

In some embodiments, the first uplink timing adjustment used for the second uplink transmission out of the first uplink transmission and the second uplink transmission means that the uplink timing adopted by the second uplink transmission has changed relative to the current uplink timing, while the first uplink transmission either maintains the current uplink timing or adopts uplink timing that has changed relative to the current uplink timing.

As an example, the uplink timing adopted by the second uplink transmission is the same as that adopted by the first uplink transmission.

As an example, the uplink timing adopted by the second uplink transmission is different from the uplink timing adopted by the first uplink transmission. In this scenario, the first node may use different transmission timings to send the first uplink transmission and the second uplink transmission respectively according to requirements.

In some embodiments, whether the first uplink timing adjustment is used for the first uplink transmission includes the case where the first uplink timing adjustment is not used for the first uplink transmission. In other words, the first uplink timing adjustment is not used for the first uplink transmission.

In some embodiments, the first uplink timing adjustment being not used for the first uplink transmission includes the case where the first uplink transmission maintains the current uplink timing.

In some embodiments, the first uplink timing adjustment being not used for the first uplink transmission includes the case where the transmission of the first uplink transmission is not transmitted (dropped).

In some embodiments, whether the transmission timing of the first uplink transmission is adjusted based on the first uplink timing adjustment needs to be determined according to actual conditions, so as to prevent the first uplink timing adjustment from affecting the transmission timing of certain uplink transmissions, thereby avoiding a reduction in communication efficiency.

Optionally, the first condition is used for determining whether the first uplink timing adjustment is used for the first uplink transmission. For example, when the first condition is satisfied, the uplink timing adopted by the first uplink transmission is different from the uplink timing adopted by the second uplink transmission. Correspondingly, when the first condition is not satisfied, the uplink timing adopted by the first uplink transmission is the same as the uplink timing adopted by the second uplink transmission.

In some embodiments, for the first node, the first uplink transmission and the second uplink transmission may be two different types of uplink transmissions. In certain scenarios, a specific uplink transmission may be converted from the first uplink transmission to the second uplink transmission, or from the second uplink transmission to the first uplink transmission.

The first uplink transmission includes at least one preamble repetition among the multiple preamble repetitions of the first PRACH transmission. It can be inferred therefrom that the first node is performing the first PRACH transmission. The first PRACH transmission may start before the first slot, after the first slot, or at the first slot; this is not limited herein. The first PRACH may be the PRACH transmission with multiple preamble repetitions mentioned above, which will be described in detail later in conjunction with S620.

The first uplink transmission including at least one preamble repetition in the first PRACH transmission, may be replaced by the first uplink transmission including the transmission of at least one preamble repetition. The at least one preamble repetition may be one or more preamble repetitions in the first PRACH transmission with multiple preamble repetitions.

In some embodiments, the first uplink transmission includes one preamble repetition in the first PRACH transmission.

In some embodiments, the first uplink transmission includes multiple preamble repetitions in the first PRACH transmission.

In some embodiments, the first uplink transmission includes one or more preamble repetitions with later transmission times in the first PRACH transmission. Exemplarily, the first PRACH transmission has 4 preamble repetitions, and the first uplink transmission may include 2 preamble repetitions with later transmission times. Taking FIG. 4 as an example, the first uplink transmission may include preamble repetition #3 and preamble repetition #4 in the PRACH transmission.

In some embodiments, the number of preamble repetitions included in the first uplink transmission is less than the number of preamble repetitions in the first PRACH transmission. In this scenario, if the transmission timing of the first uplink transmission is adjusted based on the first uplink timing adjustment, the transmission timings of the multiple preamble repetitions in the first PRACH transmission may differ. Still taking FIG. 4 as an example, the transmission timing of preamble repetition #3 is different from that of preamble repetition #1.

In some embodiments, the number of preamble repetitions included in the first uplink transmission is equal to the number of preamble repetitions in the first PRACH transmission. In this scenario, even if the transmission timing of the first uplink transmission is adjusted based on the first uplink timing adjustment, the transmission timings of the multiple preamble repetitions can still be ensured to be the same.

In some embodiments, the first uplink transmission may also include other uplink transmissions that do not perform a transmission timing adjustment based on the first uplink timing adjustment. For example, the first uplink transmission further includes a PUSCH transmission scheduled by the RAR or a PUCCH carrying a hybrid automatic repeat request acknowledgement (HARQ-ACK) for a successful RAR (successRAR) transmission.

In some embodiments, the first uplink transmission includes a PUSCH transmission scheduled by a RAR UL grant.

In some embodiments, the first uplink transmission is a message 3 sent by the first node.

In some embodiments, the first uplink transmission includes a PUSCH transmission scheduled by a fallbackRAR UL grant.

In some embodiments, the first uplink transmission includes a PUCCH transmission that carries HARQ-ACK information in response to a successRAR.

In some embodiments, the first uplink transmission is at least one of the following: a PUSCH transmission scheduled by a RAR UL grant, a PUSCH transmission scheduled by a fallbackRAR UL grant, a PUCCH transmission that carries HARQ-ACK information in response to a successRAR, or at least one preamble repetition among the multiple preamble repetitions of the first PRACH transmission.

In contrast to the first uplink transmission, the second uplink transmission does not include the above-mentioned transmissions that belong to the first uplink transmission. Exemplarily, the second uplink transmission does not include at least one preamble repetition in the first PRACH transmission.

In some embodiments, the second uplink transmission includes at least one of a first PUSCH transmission, a first sounding reference signal (SRS) transmission, or a first PUCCH transmission. As can be seen from the above, the first PUSCH is the first physical uplink shared channel, and the first PUCCH is the first physical uplink control channel.

In some embodiments, the first PUSCH is a PUSCH other than those scheduled by RAR. In other words, the first PUSCH transmission is not an uplink transmission sent according to RAR scheduling. For example, the first PUSCH transmission is not used for transmitting Message 3.

In some embodiments, the first PUSCH transmission is not a PUSCH transmission scheduled by a RAR UL grant.

In some embodiments, the first PUSCH transmission is not a PUSCH transmission scheduled by a fallbackRAR UL grant.

In some embodiments, the first PUSCH transmission is neither scheduled by a RAR UL grant nor scheduled by a fallbackRAR UL grant.

In some embodiments, the first PUCCH is a PUCCH other than that configured to transmitting acknowledgement information of a successful RAR (successRAR). In other words, the first PUCCH transmission is not used for transmitting RAR acknowledgement information.

In some embodiments, the first PUCCH transmission is not a PUCCH transmission carrying HARQ-ACK information.

In some embodiments, the first PUCCH transmission is not a PUCCH transmission that carries HARQ-ACK information in response to a successRAR.

In some embodiments, the second uplink transmission does not include a PUSCH transmission scheduled by a RAR UL grant, a PUSCH transmission scheduled by a fallbackRAR UL grant, or a PUCCH transmission that carries HARQ-ACK information in response to a successRAR.

In some embodiments, the second uplink transmission is none of a PUSCH transmission scheduled by a RAR UL grant, a PUSCH transmission scheduled by a fallbackRAR UL grant, or a PUCCH transmission that carries HARQ-ACK information in response to a successRAR.

As can be seen from the above, the first condition is used for determining whether the first uplink timing adjustment is used for the first uplink transmission. In other words, after receiving the first TAC, the first node determines whether the transmission timing of the first uplink transmission is changed based on the first uplink timing adjustment according to the first condition.

Optionally, how to determine the first condition to meet actual communication requirements is a problem that needs to be considered. As mentioned above, the first uplink transmission includes at least one preamble repetition in the first PRACH transmission. If the transmission timing of said at least one preamble repetition is adjusted based on the first uplink timing adjustment, it may result in different transmission timings among the multiple preamble repetitions in the first PRACH transmission. Therefore, the first condition needs to ensure, as much as possible, that the transmission timings of the multiple preamble repetitions in the first PRACH transmission are the same.

In some embodiments, the first condition may be related to the first effective slot corresponding to the first TAC, so that the first node can determine whether the first uplink timing adjustment may affect at least one preamble repetition in the first PRACH transmission based on the first effective slot.

In some embodiments, the original effective time of the first TAC may be referred to as the first effective slot. After receiving the first TAC, the first node determines the effective time according to the configuration information of the first TAC, and this determined effective time is the original effective time.

In some embodiments, the first effective slot may be the slot where the effective time of the first TAC is located, or it may be one or more slots related to the effective time of the first TAC; this is not limited herein.

In some embodiments, the first effective slot is an uplink slot. The first effective slot may be used for uplink transmission.

In some embodiments, both the first slot and the first effective slot are uplink slots.

In some embodiments, the first effective slot is a downlink slot.

In some embodiments, the first effective slot is a sidelink slot. As mentioned above, in a sidelink communication system, the first effective slot may be a sidelink time-domain resource used for communication between two user equipments.

In some embodiments, the first slot is an uplink slot, and the first effective slot is a sidelink slot. Exemplarily, the first TAC sent by the base station to the first node may be used by the first node to determine the sidelink timing for sidelink communication with another user equipment.

In some embodiments, the first effective slot may be one or more slots, or a slot where one or more consecutive symbols are located.

In some embodiments, the first slot is used for determining the first effective slot. In some embodiments, the first effective slot is the sum of the first slot and the first delay.

In some embodiments, the first effective slot is later than the first slot by the first delay.

In some embodiments, the first effective slot is multiple slots later than the first slot.

In some embodiments, the first effective slot is equal to the sum of the first slot and *k +* 1+2*^{µ}* · *K*_{offset}, where $k = \left⌈{N}_{slot}^{subframe , μ}⋅\left({N}_{T , 1}+{N}_{T , 2}+{N}_{TA , max}+0.5\right)/{T}_{sf}\right⌉$:
*N*_{*T*,1} is a time duration in msec of *N*₁ symbols corresponding to a PDSCH processing time for UE processing capability 1 when additional PDSCH DM-RS is configured;
*N*_{T,2} is a time duration in msec of *N*₂ symbols corresponding to a PUSCH preparation time for UE processing capability 1;
*N*_{TA,max} is the maximum timing advance value in msec that can be provided by a TA command field of 12 bits;
${N}_{slot}^{subframe , μ}$ is the number of slots per sub-frame;
*T*_{sf} is the subframe duration of 1 msec;
K_{offset} = *K*_{cell,offset} - *K*_{UE,offset}, where *K*_{cell,offset} is provided by *cellSpecificKoffset. K*_{UE,offset} is s provided by a Differential Koffset MAC CE (media access control control element) command; otherwise, if not specified separately, then *K*_{cell,offset} = 0 or *K*_{UE,offset} = 0;
*N*₁ and *N*₂ are determined with respect to the minimum subcarrier spacing (SCS) among the SCSs of all configured UL bandwidth parts (BWPs) for all uplink carriers in the TAG and of all configured DL BWPs for the corresponding downlink carriers;
*µ* is related to SCS; when *µ* = 0, the UE assumes *N*_{1,0} = 14;

The first slot and ${N}_{slot}^{subframe , μ}$ are both determined with respect to the minimum SCS among the SCSs of all configured UL BWPs for all uplink carriers in the TAG;
*N*_{TA,max} is determined with respect to the minimum SCS among the SCSs of all configured UL BWPs for all uplink carriers in the TAG and for all configured initial UL BWPs provided by initial Uplink BWP.

In some embodiments, the first slot is an uplink slot n. The uplink slot n is the last slot among uplink slot(s) overlapping with the slot(s) of PDSCH reception assuming *T_{TA}* = 0, where the PDSCH provides the timing advance command and *T_{TA}* is defined in [4, TS 38.211].

In some embodiments, the first slot is an uplink slot n, and the first effective slot is equal to *n* + *k* + 1*+*2*^{µ}* · *K*_{offset}.

In some embodiments, the method for determining the first effective slot is referred to as TS 38.213.

In some embodiments, the first delay is equal to *k* + 1+2*^{µ}* · *K*_{offset}t, where k, *µ, K*_{offset} have the same meaning as above.

In some embodiments, the first delay is determined according to the information in the first TAC.

In some embodiments, the first delay is configured by higher layers.

In some embodiments, after the first node receives the first TAC in the first slot, the first uplink timing adjustment starts to be applied from the first effective slot. In other words, the first uplink timing adjustment is applied at the start of the first effective slot.

In some embodiments, the first node receives the first TAC in uplink slot n, the first effective slot is *n* + *k +* 1+2*^{µ}* · *K*_{offset}, and the first uplink timing adjustment starts to be applied from the start of *n* + *k* + 1+2*^{µ}* · *K*_{offset}.

The above describes the method for determining the first effective slot and the association between the first uplink timing adjustment and the first effective slot. Based on the above content, the first node may determine the first effective slot after receiving the first TAC, and determine whether the first uplink timing adjustment is used for the first uplink transmission according to the first condition related to the first effective slot.

In some embodiments, the first uplink transmission includes at least one preamble repetition among the multiple preamble repetitions of the first PRACH transmission, and the first condition may be related to the first PRACH transmission and the first effective slot.

In some embodiments, the first condition may include a positional relationship between the first effective slot and the transmission timings of the multiple preamble repetitions in the first PRACH transmission. Exemplarily, the first condition may include that the first uplink timing adjustment is used for the first uplink transmission when the positional relationship is the first positional relationship, and that the first uplink timing adjustment is not used for the first uplink transmission when the positional relationship is the second positional relationship.

In some embodiments, the first condition includes whether the first effective slot falls within the time span of the first PRACH transmission.

As an example, when the first effective slot falls within the time span of the first PRACH transmission, the first uplink timing adjustment is not used for the first uplink transmission; when the first effective slot does not fall within the time span of the first PRACH transmission, the first uplink timing adjustment is used for the first uplink transmission.

In some embodiments, when the first PRACH is transmitted through a plurality of PRACH occasions in a RO set, the first condition may include the positional relationship between the first effective slot and the plurality of PRACH occasions. The following will be described in detail in conjunction with the embodiments.

In some embodiments, the first condition is irrelevant to the first effective slot. In other words, the first condition may also be determined based on the first TAC, the first uplink transmission, and/or other relevant parameters of the first PRACH transmission.

In some embodiments, the first condition is related to the number of preamble repetitions in the first PRACH transmission that are included in the first uplink transmission. The first condition may include whether the number of preamble repetitions included in the first uplink transmission is less than the number of preamble repetitions in the first PRACH transmission.

As an example, when the number of preamble repetitions included in the first uplink transmission is less than the number of preamble repetitions in the first PRACH transmission, the first uplink timing adjustment is not used for the first uplink transmission; when the number of preamble repetitions included in the first uplink transmission is equal to the number of preamble repetitions in the first PRACH transmission, the first uplink timing adjustment is used for the first uplink transmission.

Continuing to refer to FIG. 6, in S620, the first node performs the first PRACH transmission to the second node. As mentioned above, PRACH denotes Physical Random Access Channel, and the first PRACH transmission is a first Physical Random Access Channel transmission.

As mentioned above, the first PRACH transmission is a PRACH transmission with multiple preamble repetitions. In other words, the first PRACH transmission includes multiple preamble repetitions. Exemplarily, the first PRACH transmission may be any of the PRACH transmissions shown in FIGS. 2 to 5 mentioned above. When the first PRACH transmission is the PRACH transmission in FIG. 3 or FIG. 4, the first PRACH transmission includes 4 preamble repetitions. When the first PRACH transmission is the PRACH transmission in FIG. 5, the first PRACH transmission includes 8 preamble repetitions.

In some embodiments, the first node may perform the first PRACH transmission by sending multiple preamble repetitions. Exemplarily, the first node performing the first PRACH transmission may be rephrased as the first node sending the multiple preamble repetitions in the first PRACH transmission. Exemplarily, the first node sending multiple preamble repetitions may mean that the first node performing multiple PRACH transmissions in one RACH attempt.

In some embodiments, the first PRACH transmission may also be referred to as a multiple PRACH transmission.

In some embodiments, the preamble repetition sent by the first node may be replaced with one of preamble, PRACH preamble, random access preamble, or preamble format.

It should be understood that the first node may send preamble repetitions during a random access procedure (also referred to as a random access process), or during beam management or other PRACH transmissions; this is not limited herein.

In some embodiments, the preamble repetitions sent by the first node may be the random access preambles sent by the first node in the current random access procedure. The random access procedure may be one or more RACH attempts performed by the first node based on multiple PRACH transmissions.

In some embodiments, the number of preamble repetitions included in the first PRACH transmission is configured by higher-layer signaling.

In some embodiments, the first PRACH transmission may include M preamble repetitions, and the first PRACH transmission may be referred to as a PRACH transmission with M preamble repetitions. Exemplarily, the first PRACH transmission is configured to include M preamble repetitions.

In some embodiments, M may be one of 2, 4, or 8; alternatively, M may be any positive integer less than or equal to 8. For example, the PRACH transmissions in FIGS. 2 to 4 include 4 preamble repetitions.

In some embodiments, one or more preamble repetitions among the M preamble repetitions may be dropped.

In some embodiments, one or more preamble repetitions in the first PRACH transmission are not transmitted (dropped) due to uplink resource conflicts.

Exemplarily, when multiple uplink transmissions conflict, the first node may drop one or more preamble repetitions in the first PRACH transmission according to the transmission priority rules.

In some embodiments, when a transmission priority of a preamble repetition is higher than that of the conflicting uplink transmission, the first node may send the preamble repetition on the configured resource.

In some embodiments, when a transmission priority of a preamble repetition is equal to or lower than that of the conflicting uplink transmission, the first node may not transmit (drop) the preamble repetition.

The first node performs the transmission of at least one preamble repetition in the first PRACH transmission on the first RO (Random Access Occasion) set. As mentioned above, RO may stand for Random Access Occasion, and the first RO set refers to the first random access channel occasion set.

In some embodiments of the present disclosure, the RO set may include or be replaced by at least one of the following: a random access channel occasion group (ROG), a physical random access channel occasion group (PRACH occasion group), a PRACH transmission occasion set, or a PRACH transmission occasion group.

In some embodiments, the first RO set may be replaced by a first PRACH occasion group.

In some embodiments, the first RO set may be replaced by a first PRACH occasion set.

In some embodiments, the first RO set may be replaced by a first PRACH transmission occasion set.

The first node sending at least one preamble repetition in the first PRACH transmission on the first RO set may mean that the at least one preamble repetition is sent on the first RO set. The at least one preamble repetition in the first PRACH transmission belongs to the multiple preamble repetitions of the first PRACH transmission. The time-domain resources corresponding to the first RO set are used for sending the multiple preamble repetitions of the first PRACH transmission. That is, the first RO set is used for transmitting multiple preamble repetitions included in the first PRACH transmission.

In some embodiments, the first PRACH transmission corresponds to the first RO set.

The first RO set may include a plurality of PRACH occasions. As known from the foregoing, the plurality of PRACH occasions may refer to multiple Physical Random Access Channel occasions. In the embodiments of the present disclosure, a PRACH occasion may include or be replaced with at least one of the following: an RO (Random Access Occasion), or a PRACH transmission occasion.

In some embodiments, the plurality of PRACH occasions may be replaced with multiple ROs.

In some embodiments, the plurality of PRACH occasions may be replaced with multiple PRACH transmission occasions.

In some embodiments, the plurality of PRACH occasions included in the first RO set are all valid. A PRACH occasion being valid means that the time-domain resource corresponding to the PRACH occasion may be used for PRACH transmission.

In some embodiments, any PRACH occasion among the multiple PRACH occasions may be a slot, a symbol or consecutive symbols in a slot, or consecutive symbols in at least two adjacent slots; this is not limited herein.

The multiple PRACH occasions in the first RO set may be used for transmitting the multiple preamble repetitions in the first PRACH transmission. Exemplarily, the multiple preamble repetitions included in the first PRACH transmission are respectively carried on the multiple PRACH occasions.

In some embodiments, the multiple preamble repetitions included in the first PRACH transmission are in one-to-one correspondence with the plurality of PRACH occasions in the first RO set.

In some embodiments, the plurality of PRACH occasions in the first RO set are respectively used for the multiple preamble repetitions included in the first PRACH transmission.

In some embodiments, the number of PRACH occasions in the first RO set is configured.

In some embodiments, the first RO set may include N PRACH occasions, where N is one of {2, 4, 8}.

In some embodiments, the value of N is determined by the first node itself. As an example, the first node may determine the value of N according to the priority of the service. When the service priority is high, N may be 4 or 8.

In some embodiments, when the first PRACH transmission is configured to include M preamble repetitions, M is less than or equal to N.

In some embodiments, the N PRACH occasions are orthogonal to each other in the time-frequency domain.

In some embodiments, the N PRACH occasions are continuous in the time domain and use the same frequency-domain resource.

In some embodiments, the first slot may be within the time-domain range occupied by the plurality of PRACH occasions, or outside the time-domain range occupied by the plurality of PRACH occasions; this is not limited herein. The time-domain range occupied by the plurality of PRACH occasions may be a continuous time period from the first PRACH occasion to the last PRACH occasion among the plurality of PRACH occasions.

In some embodiments, at least one preamble repetition in the first PRACH transmission sent by the first node may correspond to at least one preamble format. Exemplarily, when the at least one preamble repetition sent by the first node includes multiple preamble repetitions, the multiple preamble repetitions correspond to multiple different preamble formats respectively.

In some embodiments, when the at least one preamble repetition sent by the first node includes multiple preamble repetitions, at least two of the multiple preamble repetitions correspond to different preamble formats. For example, Preamble Repetition 1 among the multiple preamble repetitions adopts a preamble format that includes multiple sequences, while Preamble Repetition 2 adopts a preamble format that includes one sequence.

In some embodiments, each preamble repetition among the at least one preamble repetition corresponds to one preamble format.

In some embodiments, each preamble repetition among the at least one preamble repetition includes one preamble format.

In some embodiments, each preamble repetition among the at least one preamble repetition is one preamble format.

In some embodiments, the first PRACH transmission includes multiple preamble repetitions, and any two preamble repetitions among the multiple preamble repetitions adopt the same preamble format.

In some embodiments, the first PRACH transmission includes multiple preamble repetitions, and at least two preamble repetitions among the multiple preamble repetitions adopt different preamble formats.

It should be noted that the preamble format corresponding to any preamble repetition in the first PRACH transmission may be any existing preamble format or any future preamble format; this is not limited herein.

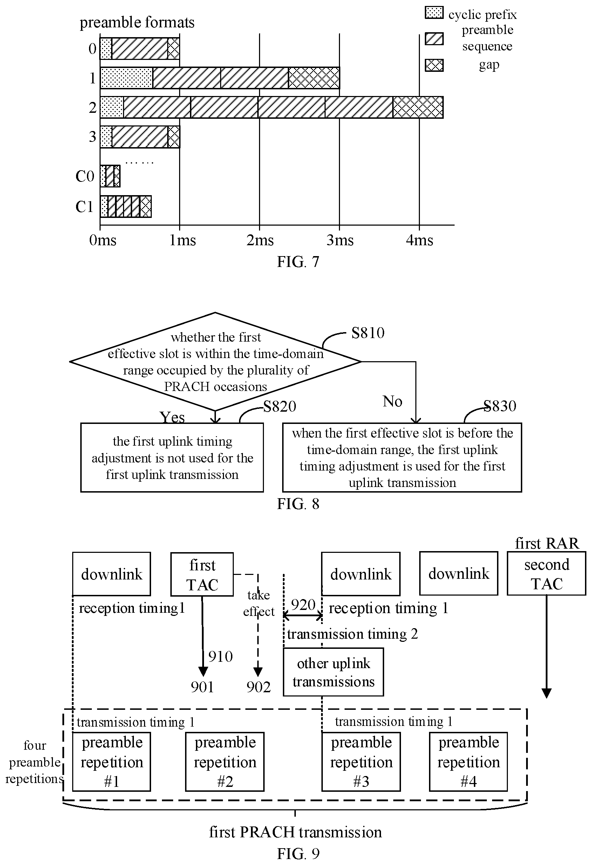

For ease of understanding, the preamble formats corresponding to the preamble repetitions sent by the first node are described below by way of example in conjunction with several preamble formats in FIG. 7. FIG. 7 only shows some preamble formats for comparison. It should be understood that the preamble formats in FIG. 7 are merely examples and do not limit the various preamble formats corresponding to the multiple preamble repetitions sent by the first node.

The preamble formats shown in FIG. 7 include Format 0 to Format 3, as well as Format C0 and Format C1. As can be seen from FIG. 7, there are also various other preamble formats between Format 3 and Format C0.

Referring to FIG. 7, a preamble format mainly includes a cyclic prefix (CP) at the front, a preamble sequence (SEQ) in the middle, and a guard period (GP) at the end. All preamble formats include one CP and n SEQs, while some preamble formats may not include a GP.

As can be seen from FIG. 7, the number n of SEQs may be 1, such as Format 0 and Format C0 in FIG. 7. The number n of SEQs may also be other integers greater than 1. For example, in FIG. 7, the value of n for Format 1 is 2, and the value of n for Format 2, Format 3, and Format C1 is 4. It should be understood that n may also be other values not shown in FIG. 7.

Continuing to refer to FIG. 7, different preamble formats have different time durations. For example, Format 0 and Format 3 have a time duration of 1 ms, Format 1 has a time duration of 3 ms, Format 2 has a time duration longer than 4 ms, and Format C0 and Format C1 have a time duration shorter than 1 ms. Due to the differences in the total time duration and the value of n among different preamble formats, the time durations of the CP, SEQ, and GP in different formats also vary.

In S620, the preamble format corresponding to any preamble repetition among the at least one preamble repetition sent by the first node when performing the first PRACH transmission may be any of the formats in FIG. 7 or may be other preamble formats.

Corresponding to the first node, the second node may receive at least one preamble repetition on the first RO set. The number of preamble repetitions received by the second node is less than or equal to the number of preamble repetitions sent by the first node. In some embodiments, the second node may fail to detect a certain preamble repetition sent by the first node, resulting in the number of received preamble repetitions being less than the number of sent ones.

Exemplarily, the second node detects one or more preamble repetitions on the plurality of PRACH occasions in the first RO set.

As can be seen from FIG. 6, after the first node receives the first TAC and determines the first uplink timing adjustment, not all transmission timings of uplink transmissions are adjusted according to the first uplink timing adjustment. For the first uplink transmission that includes at least one preamble repetition in the first PRACH transmission, the transmission timing of the at least one preamble repetition may not be adjusted according to the first uplink timing adjustment. This helps to prevent the multiple preamble repetitions in the first PRACH transmission from having different transmission timings.

As known from the foregoing, the first node may determine whether the first uplink timing adjustment is used for the first uplink transmission according to the first condition. Exemplarily, the first condition may be related to the first effective slot. For instance, the first condition may include the positional relationship between the first effective slot and the plurality of PRACH occasions in the first RO set.

The positional relationship between the first effective slot and the plurality of PRACH occasions includes two scenarios: the first effective slot is within the time-domain range occupied by the plurality of PRACH occasions, and the first effective slot falls outside the time-domain range occupied by the plurality of PRACH occasions. Further, when the first effective slot is outside the time-domain range occupied by the plurality of PRACH occasions, it can be further divided into two sub-scenarios: the first effective slot is before the time-domain range, and the first effective slot is after the time-domain range.

Since the plurality of PRACH occasions in the first RO set are used for performing the first PRACH transmission, the time-domain range occupied by the plurality of PRACH occasions may also be referred to as the time span of the first PRACH transmission. In other words, the statement "the first effective slot is within the time-domain range occupied by the plurality of PRACH occasions in the first RO set" may be rephrased as "the first effective slot is within the time span of the first PRACH transmission". Correspondingly, the statement "the first effective slot is outside the time-domain range occupied by the plurality of PRACH occasions" may also be rephrased as "the first effective slot is outside the time span of the first PRACH transmission."

In some embodiments, the time-domain range occupied by the plurality of PRACH occasions is a continuous time domain that starts with the first PRACH occasion among the plurality of PRACH occasions and ends with the last PRACH occasion among the plurality of PRACH occasions.

In some embodiments, "the first effective slot is within the time-domain range occupied by the plurality of PRACH occasions" means that the first effective slot is later than the start of the first PRACH occasion in the first RO set and earlier than the end of the last PRACH occasion in the first RO set.

In some embodiments, the first effective slot is not earlier than the start of the first PRACH occasion among the plurality of PRACH occasions, and the first effective slot is not later than the end of the last PRACH occasion among the plurality of PRACH occasions.

In some embodiments, when the first effective slot is within the time-domain range occupied by the plurality of PRACH occasions, the first effective slot is any one or more slots within this time-domain range.

In some embodiments, when the first effective slot is before the time-domain range occupied by the plurality of PRACH occasions, the first effective slot is earlier than the start of the first PRACH occasion in the first RO set.

In some embodiments, when the first effective slot is after the time-domain range occupied by the plurality of PRACH occasions, the first effective slot is later than the end of the last PRACH occasion in the first RO set.

In some embodiments, the positional relationship may further include an overlap between the first effective slot and any PRACH occasion among the plurality of PRACH occasions. In other words, the first effective slot overlaps with at least one PRACH occasion in the first RO set. In this scenario, the first effective slot is usually within the time-domain range occupied by the plurality of PRACH occasions.

In some embodiments, when the first effective slot overlaps with at least one PRACH occasion in the first RO set, the first uplink timing adjustment can at least not affect the transmission timing of the preamble repetition carried by the overlapping PRACH occasion. Therefore, the first uplink timing adjustment may cause differences in the transmission timings of the multiple preamble repetitions in the first PRACH transmission.

As an example, when the first effective slot overlaps with any PRACH occasion in the first RO set except the last PRACH occasion, the first uplink timing adjustment is not used for at least one preamble repetition in the first PRACH transmission, so as to avoid differences in the transmission timings of the multiple preamble repetitions.

As an example, when the first effective slot overlaps with the last PRACH occasion in the first RO set, the first uplink timing adjustment cannot cause differences in the transmission timings of the multiple preamble repetitions, because the multiple preamble repetitions have already been sent or are being sent in this slot.

As an example, when the first effective slot overlaps with the PRACH occasion occupied by the last actually sent preamble repetition in the first PRACH transmission, the first uplink timing adjustment may also not cause differences in the transmission timings of the multiple actually sent preamble repetitions.

The foregoing describes various positional relationships between the first effective slot and the plurality of PRACH occasions. When the first condition is related to these positional relationships, the first node may determine the first condition according to the relative position between the first effective slot and the plurality of PRACH occasions.

In some embodiments, the first condition includes whether the first effective slot is within the time-domain range occupied by the plurality of PRACH occasions. Exemplarily, when the first effective slot is within the time-domain range occupied by the plurality of PRACH occasions, the first uplink timing adjustment is not used for the first uplink transmission; when the first effective slot is before the time-domain range occupied by the plurality of PRACH occasions, the first uplink timing adjustment is used for the first uplink transmission.

In some embodiments, when the first effective slot is within the time-domain range occupied by the plurality of PRACH occasions, the first uplink timing adjustment may cause differences in the transmission timings of the multiple preamble repetitions in the first PRACH transmission. To avoid the impact of the first uplink timing adjustment on the transmission timing of at least one preamble repetition, the first node may keep the transmission timing of the at least one preamble repetition unchanged. In other words, the second node may keep the transmission timing of the first uplink transmission unchanged.

In some embodiments, when the first effective slot is within the time-domain range occupied by the plurality of PRACH occasions, the first uplink timing adjustment is not used for the first uplink transmission; when the first effective slot is outside the time-domain range occupied by the plurality of PRACH occasions, the first uplink timing adjustment is used for the first uplink transmission.

In some embodiments, when the first effective slot is within the time-domain range occupied by the plurality of PRACH occasions, the first node keeps the transmission timing of the first uplink transmission unchanged.

In some embodiments, the scenario where the first effective slot is outside the time-domain range occupied by the plurality of PRACH occasions further includes two sub-scenarios. When the first effective slot is before the time-domain range occupied by the plurality of PRACH occasions, the transmission timings of all the multiple preamble repetitions may be determined according to the first uplink timing adjustment, and the transmission timings remain the same. When the first effective slot is after the time-domain range occupied by the plurality of PRACH occasions, the transmission timings of the multiple preamble repetitions do not need to take the first uplink timing adjustment into account.

In some embodiments, when the first effective slot is before the time-domain range occupied by the plurality of PRACH occasions, the first node determines the transmission timing of the first uplink transmission according to the first uplink timing adjustment.

In some embodiments, when the first effective slot is after the time-domain range occupied by the plurality of PRACH occasions, the transmission timing of the first uplink transmission may not take the first TAC into account.

The foregoing description is provided by taking at least one preamble repetition included in the first uplink transmission as an example. It should be understood that, for other uplink transmissions within the first uplink transmission, the positional relationship between the first effective slot and the time span of the other uplink transmissions may also be used for determining whether the first uplink timing adjustment is used for the other uplink transmissions. For ease of understanding, the method by which the first effective slot affects the first uplink transmission is described below by way of example in conjunction with FIG. 8.

Referring to FIG. 8, in S810, it is determined whether the first effective slot is within the time-domain range occupied by the plurality of PRACH occasions. If yes, S820 is performed; if no, S830 is performed.

In S820, the first uplink timing adjustment is not used for the first uplink transmission. The first node may keep the transmission timing of the first uplink transmission unchanged, thereby preventing the first uplink transmission from being affected by the first TAC.

In S830, when the first effective slot is before the time-domain range, the first uplink timing adjustment is used for the first uplink transmission. In S830, a further determination may be made as to whether the first effective slot is before or after the time-domain range. When the first effective slot is before the time-domain range occupied by the plurality of PRACH occasions, the transmission timing of the first uplink transmission is determined according to the first uplink timing adjustment. When the first effective slot is after the time-domain range, the transmission timing of the first uplink transmission may not be affected by the first uplink timing adjustment.

The foregoing describes, in conjunction with FIG. 8, the method for determining whether the first uplink timing adjustment is used for the first uplink transmission based on the positional relationship between the first effective slot and the plurality of PRACH occasions. For at least one preamble repetition in the first uplink transmission, if the first effective slot is within the time-domain range occupied by the plurality of PRACH occasions, the first uplink timing adjustment may not be used for the at least one preamble repetition. This prevents the multiple preamble repetitions in the first PRACH transmission from having different transmission timings, thereby reducing detection interference and improving random access efficiency.

Optionally, how the first uplink timing adjustment is not used for at least one preamble repetition also needs to be considered. As known from the foregoing, when the first effective slot is within the time-domain range occupied by the plurality of PRACH occasions, the first node may keep the transmission timing of the first uplink transmission unchanged. In other words, at least one preamble repetition in the first PRACH transmission may maintain the current uplink timing. For ease of understanding, an exemplary description is provided below by comparing FIG. 9 with FIG. 4. For brevity, explanations already given in FIG. 4 will not be repeated.

Referring to FIG. 9, the first PRACH transmission includes 4 preamble repetitions, which are sent through 4 PRACH occasions respectively. The other uplink transmission is the second uplink transmission. The first node receives the first TAC in the first slot 901. The meaning of the information 910 carried by the first TAC and the time period 920 is the same as the corresponding information in FIG. 4.

As shown in FIG. 9, the first effective slot 902 falls within the time-domain range occupied by the 4 PRACH occasions. The first uplink transmission includes Preamble Repetition #3 and Preamble Repetition #4. By comparing FIG. 4 and FIG. 9, it can be seen that under the effect of the time period 920, the transmission timing of the other uplink transmission changes from Transmission Timing 1 to Transmission Timing 2, but the transmission timing of Preamble Repetition #3 remains Transmission Timing 1. Therefore, in the method shown in FIG. 9, the sending node of the first PRACH transmission keeps the transmission timing of the first uplink transmission unchanged. In other words, the first uplink timing adjustment determined by the first TAC is not used for the first uplink transmission.

As can be seen from FIG. 9, this method only delays the effective time of the first TAC for preamble repetitions. In other words, timing adjustment for preamble repetitions is not performed within the time span of the first PRACH transmission, while other uplink transmissions except preamble repetitions (i.e., the second uplink transmission) still apply the first TAC in accordance with the method specified in TS 38.213. The method shown in FIG. 9 has little impact on the second uplink transmission and can effectively reduce uplink out-of-sync of the second uplink transmission.

However, the first node needs to perform uplink transmission with different transmission timings after the first effective slot 902, which imposes certain requirements on the hardware capability of the device. For example, when the first node is a UE, the UE needs to be capable of performing uplink transmission with different transmission timings within a single time period. If the UE's radio frequency unit is limited and can only use one transmission timing for uplink transmission within a time period, the UE has to drop at least one of the multiple frequency-division multiplexed uplink transmissions. This may affect the performance of PRACH transmission or other uplink transmissions.

To solve this problem, an embodiment of the present disclosure further proposes a method for not using the first uplink timing adjustment for at least one preamble repetition. In this method, when the first effective slot is within the time-domain range occupied by the plurality of PRACH occasions, the first node may drop (not transmit) at least one preamble repetition that is scheduled to be sent after the first effective slot. This prevents the transmission timings of preamble repetitions sent before the first effective slot from differing from those of preamble repetitions sent after the first effective slot.

In some embodiments, when the first effective slot is within the time-domain range occupied by the plurality of PRACH occasions, the first node drops (does not transmit) at least one preamble repetition in the first PRACH transmission included in the first uplink transmission.

As an example, when the first PRACH transmission includes 8 preamble repetitions and the 8 preamble repetitions are sent on 8 PRACH occasions respectively: if the first effective slot is before the 7th PRACH occasion, the 7th and 8th preamble repetitions are dropped (not transmitted); if the first effective slot is before the 8th PRACH occasion, the 8th preamble repetition is dropped (not transmitted).

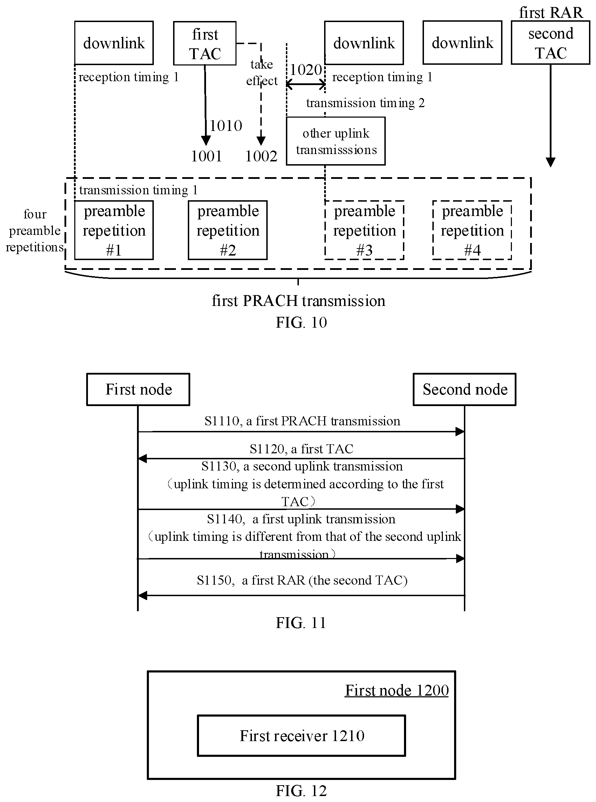

For ease of understanding, an exemplary description is provided below by comparing FIG. 10 with FIG. 9. For brevity, explanations already given in FIG. 9 will not be repeated. In FIG. 10, preamble repetitions indicated by dashed boxes represent those whose transmission is dropped, while preamble repetitions indicated by solid boxes represent those whose transmission is not dropped.

Referring to FIG. 10, Preamble Repetition #3 and Preamble Repetition #4, which are scheduled to be sent after the first effective slot 1002, are dropped (not transmitted). In other words, the second node can receive at most Preamble Repetition #1 and Preamble Repetition #2.

As can be seen from FIG. 10, for the multiple preamble repetitions in the first PRACH transmission: once an uplink timing adjustment occurs within the time span of the first PRACH transmission, the preamble repetitions scheduled to be sent after the timing adjustment takes effect may be dropped (not be transmitted). This prevents the multiple preamble repetitions from having different transmission timings due to the timing adjustment.

As known from the foregoing, in the solution proposed in the embodiment of the present disclosure: if the first effective slot of the received first TAC is within the time span of the first PRACH transmission, the first node may either keep the transmission timing of the preamble repetitions scheduled to be sent after the first effective slot unchanged or not transmit (drop) those preamble repetitions. This avoids differences in the transmission timings of the multiple preamble repetitions in the first PRACH transmission caused by the first TAC.

The first node performs the first PRACH transmission for random access. After sending at least one preamble repetition, the first node needs to receive a response from the second node to complete the random access procedure.

In some embodiments, the first node may receive the first RAR within a first time window. As known from the foregoing, RAR may represent a Random Access Response, and the first RAR is the first random access response.

The first time window may be a window for the first node to monitor the corresponding RAR after performing operation S610. The first time window may also be referred to as a RAR time window.

In some embodiments, the last PRACH occasion in the first RO set is used for determining the first time window. For example, the last PRACH occasion is used for determining the start of the first time window.

The first RAR includes a second TAC. The second TAC is a second Timing Advance Command. Exemplarily, the first RAR may be the RAR carrying TAC2 in FIG. 3 or FIG. 4, and the second TAC may be TAC2 therein. Exemplarily, the first RAR and the second TAC may be as shown in FIG. 9 and FIG. 10.

The second TAC is related to any preamble repetition among the at least one preamble repetition. Exemplarily, the second TAC is determined according to the transmission timing of any preamble repetition. The at least one preamble repetition is part of the multiple preamble repetitions included in the first PRACH transmission.

Optionally, the second TAC may also be determined according to the transmission timing of the at least one preamble repetition. Through the method described above, even if the first TAC takes effect within the time span of the first PRACH transmission, it may not cause differences in the transmission timings of the at least one preamble repetition that is transmitted. In other words, the transmission timings of the at least one preamble repetition sent by the first node are the same.

In some embodiments, the transmission timing of each preamble repetition among the at least one preamble repetition is the same.

In some embodiments, the transmission timing of any two preamble repetitions among the multiple preamble repetitions is the same.

In some embodiments, the transmission timing of the at least one preamble repetition or the transmission timing of each preamble repetition among the at least one preamble repetition is used for determining the second TAC. Since the transmission timings of the at least one preamble repetition are the same, any one or any multiple preamble repetitions may be used for determining the second TAC.

In some embodiments, the transmission timing of the at least one preamble repetition or the transmission timing of each preamble repetition among the at least one preamble repetition is used by the second node to determine the second TAC.

In some embodiments, the second TAC includes a positive integer number of bits.

The foregoing describes the procedure of the first node after receiving the first TAC and performing the first PRACH transmission. For ease of understanding, the method for the first node to perform the first PRACH transmission with multiple preamble repetitions in the embodiment of the present disclosure is described below by way of example in conjunction with FIG. 11. FIG. 11 is also described from the perspective of interaction between the first node and the second node. For brevity, terms already explained in FIG. 6 will not be repeated.

Referring to FIG. 11, operations S1110 and S1120 have been explained in FIG. 6 and will not be repeated here.

In S1130, the first node sends a second uplink transmission to the second node. The second uplink transmission is determined according to a first TAC. Since the first TAC is used for determining the first uplink timing adjustment, the uplink timing of the second uplink transmission is determined according to the first uplink timing adjustment.

In S1140, the first node sends a first uplink transmission to the second node. The uplink timing of the first uplink transmission is different from that of the second uplink transmission. In other words, the first uplink timing adjustment is not used for the first uplink transmission. As described above, the first uplink transmission may use the current uplink timing.

In S1150, the second node sends a first RAR to the first node. The first RAR includes the second TAC. As described above, the second TAC is related to at least one preamble repetition in the first PRACH transmission or each preamble repetition among the at least one preamble repetition.

It should be understood that the sequence of the multiple procedures shown in FIG. 11 is merely an example and does not limit the embodiments of the present disclosure. For example, operation S1110 may be performed after operation S1120, and operation S1130 may also be performed after operation S1140.

The method embodiments of the present disclosure are described in detail above with reference to FIGS. 1 to 11. The device embodiments of the present disclosure are described in detail below with reference to FIGS. 12 to 15. It should be understood that the description of the method embodiments corresponds to the description of the device embodiments, therefore, details not described in detail may refer to the preceding method embodiments.

FIG. 12 is a first node for wireless communication provided in some embodiments of the present disclosure. As shown in FIG. 12, the first node 1200 includes a first receiver 1210.

The first receiver 1210 may be configured to receive a first TAC in a first slot. The first TAC is used for determining a first uplink timing adjustment, and a first condition is used for determining whether the first uplink timing adjustment is used for a first uplink transmission. A first PRACH transmission includes a plurality of preamble repetitions, and the first uplink transmission includes at least one preamble repetition of the plurality of preamble repetitions of the first PRACH transmission.

In some embodiments, the first uplink timing adjustment is applied to a start of a first effective slot, and the first condition is related to the first effective slot.

In some embodiments, the first uplink timing adjustment is used for a second uplink transmission, and the second uplink transmission includes at least one of a first PUSCH transmission, a first SRS transmission, or a first PUCCH transmission.

In some embodiments, the first node 1200 further includes a first transmitter, which may be configured to transmit the at least one preamble repetition in the first PRACH transmission on a first RO set. The first RO set includes a plurality of PRACH occasions, and the plurality of PRACH occasions are respectively used for the plurality of preamble repetitions in the first PRACH transmission, and the first condition includes whether the first effective slot is within the time-domain range occupied by the plurality of PRACH occasions.

In some embodiments, the first slot is used for determining the first effective slot, and the first effective slot overlaps with at least one PRACH occasion in the first RO set.

In some embodiments, the first effective slot is a sum of the first slot and a first delay.

In some embodiments, when the first effective slot is within the time-domain range occupied by the plurality of PRACH occasions, the first uplink timing adjustment is not used for the first uplink transmission; when the first effective slot is before the time-domain range occupied by the plurality of PRACH occasions, the first uplink timing adjustment is used for the first uplink transmission.

In some embodiments, the first node 1200 further includes a first processor, which may be configured to maintain a transmission timing of the first uplink transmission. The first effective slot is within the time-domain range occupied by the plurality of PRACH occasions.

In some embodiments, the first node 1200 further includes a second processor, which may be configured to drop the at least one preamble repetition included in the first uplink transmission. The first effective slot is within the time-domain range occupied by the plurality of PRACH occasions.

In some embodiments, the first receiver 1210 is further configured to receive a first RAR within a first time window, and the first RAR includes a second TAC. The at least one preamble repetition is transmitted on a first RO set, a last PRACH occasion in the first RO set is used for determining a start of the first time window, and the second TAC is related to any of the at least one preamble repetition.

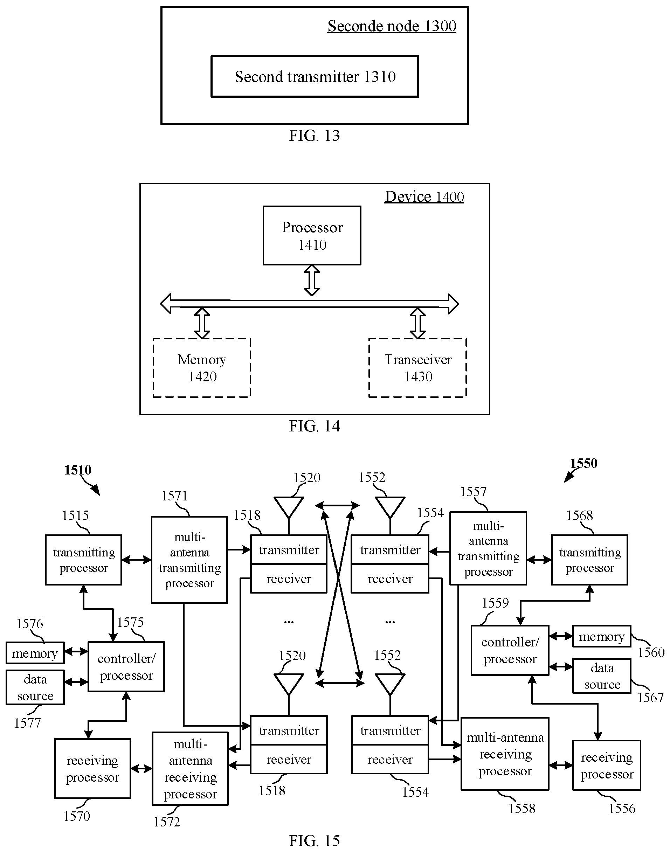

In some embodiments, the first receiver 1210 may be a transceiver 1430, and the first node 1200 may further include a processor 1410 and a memory 1420, as specifically shown in FIG. 14.

FIG. 13 is a second node for wireless communication provided in some embodiments of the present disclosure. As shown in FIG. 13, the second node 1300 includes a second transmitter 1310.

The second transmitter 1310 may be configured to transmit a first TAC in a first slot. The first TAC is used for determining a first uplink timing adjustment, and a first condition is used for determining whether the first uplink timing adjustment is used for a first uplink transmission. A first PRACH transmission includes a plurality of preamble repetitions, and the first uplink transmission includes at least one preamble repetition of the plurality preamble repetitions of the first PRACH transmission.

In some embodiments, the first uplink timing adjustment applied to a start of a first effective slot, and the first condition is related to the first effective slot.

In some embodiments, the first uplink timing adjustment is used for a second uplink transmission, and the second uplink transmission includes at least one of a first PUSCH transmission, a first SRS transmission, and a first PUCCH transmission.

In some embodiments, the second node 1300 further includes a second receiver, which may be configured to receive the at least one preamble repetition in the first PRACH transmission on a first RO set. The first RO set includes a plurality of PRACH occasions, and the plurality of PRACH occasions are respectively used for the plurality of preamble repetitions in the first PRACH transmission. The first condition includes whether the first effective slot is within the time-domain range occupied by the plurality of PRACH occasions.

In some embodiments, the first slot is used for determining the first effective slot, and the first effective slot overlaps with at least one PRACH occasion in the first RO set.

In some embodiments, the first effective slot is a sum of the first slot and a first delay.

In some embodiments, when the first effective slot is within the time-domain range occupied by the plurality of PRACH occasions, the first uplink timing adjustment is not used for the first uplink transmission; when the first effective slot is before the time-domain range occupied by the plurality of PRACH occasions, the first uplink timing adjustment is used for the first uplink transmission.

In some embodiments, the second transmitter 1310 is further configured to transmit a first RAR within a first time window, and the first RAR includes a second TAC. The at least one preamble repetition is transmitted on a first RO set, a last PRACH occasion in the first RO set is used for determining a start of the first time window, and the second TAC is related to any of the at least one preamble repetition.

In some embodiments, the second transmitter 1310 may be a transceiver 1430, and the second node 1300 may further include a processor 1410 and a memory 1420, as specifically shown in FIG. 14.

FIG. 14 is a schematic structural diagram of a communication device according to some embodiments of the present disclosure. The dashed lines in FIG. 14 indicate that the unit or module is optional. The device 1400 may be configured to implement the methods described in the above method embodiments. The device 1400 may be a chip, a user equipment (UE), or a network device.

The device 1400 may include one or more processors 1410. The processor 1410 may support device 1400 to implement the methods described in the above method embodiments. The processor 1410 may be a general purpose processor or a dedicated processor. For example, the processor may be a central processing unit (CPU). Or, the processor may also be other general purpose processor, digital signal processor (DSP), an application specific integrated circuit (ASIC), field programmable gate array (FPGA) or other programmable logic device, discrete gate or transistor logic device, discrete hardware component and so on. The general purpose processor may be a microprocessor or the processor may be any conventional processor or the like.

The device 1400 may also include one or more memories 1420. A program is stored on the memory 1420, and may be executed by the processor 1410, such that the processor 1410 implements the methods described in the above method embodiments. The memory 1420 may be independent of the processor 1410 or may be integrated in the processor 1410.

The device 1400 may also include a transceiver 1430. The processor 1410 may communicate with other devices or chips via the transceiver 1430. For example, the processor 1410 may transmit and receive data with other devices or chips via the transceiver 1430.

FIG. 15 is a schematic diagram of a hardware module of a communication device according to an embodiment of the present disclosure. Specifically, FIG. 15 shows a block diagram of a first communication device 1550 and a second communication device 1510 that communicate with each other in an access network.

The first communication device 1550 includes a controller/processor 1559, a memory 1560, a data source 1567, a transmitting processor 1568, a receiving processor 1556, a multi-antenna transmitting processor 1557, a multi-antenna receiving processor 1558, a transmitter/receiver 1554 and an antenna 1552.

The second communication device 1510 includes a controller/processor 1575, a memory 1576, a data source 1577, a receiving processor 1570, a transmitting processor 1515, a multi-antenna receiving processor 1572, a multi-antenna transmitting processor 1571, a transmitter/receiver 1518 and an antenna 1520.

In the transmission from the second communication device 1510 to the first communication device 1550, at the second communication device 1510, an upper layer data packet from the core network or an upper layer data packet from the data source 1577 is provided to the controller/processor 1575. The core network and the data source 1577 represent all protocol layers above the L2 layer. The controller/processor 1575 implements layer L2 functionality. In the transmission from the second communication device 1510 to the first communication device 1550, the controller/processor 1575 provides header compression, encryption, packet segmentation and reordering, and multiplexing between logical and transport channels, and radio resource allocation to the first communication device 1550 based on various priority metrics. The controller/processor 1575 is also responsible for the retransmission of lost packets, and for signaling to the first communication device 1550. The transmitting processor 1515 and the multi-antenna transmitting processor 1571 implement various signal processing functions for the layer L1 (i.e., the physical layer). The transmitting processor 1515 implements encoding and interleaving to facilitate forward error correction at the second communication device 1510, and mapping of signal clusters based on various modulation schemes (e.g., binary phase shift keying, quadrature phase shift keying, M phase shift keying, M quadrature amplitude modulation). The multi-antenna transmitting processor 1571 performs digital spatial precoding on the coded and modulated symbols, including codebook-based precoding and non-codebook-based precoding, and beamforming processing to generate one or more spatial streams. The transmitting processor 1515 then maps each spatial stream to subcarriers, multiplexes with a reference signal (e.g., pilot) in the time domain and/or frequency domain, and then uses an inverse fast Fourier transform to generate a physical channel carrying the time-domain multi-carrier symbol stream. The multi-antenna transmitting processor 1571 then performs a transmit analog precoding/beamforming operation on the time-domain multi-carrier symbol stream. Each transmitter 1518 converts the baseband multi-carrier symbol stream provided by the multi-antenna transmitting processor 1571 into a radio frequency stream, which is then provided to a different antenna 1520.

In the transmission from the second communication device 1510 to the first communication device 1550, at the first communication device 1550, each receiver 1554 receives signals through its respective antenna 1552. Each receiver 1554 recovers the information modulated onto the radio frequency carrier and converts the radio frequency stream into a baseband multi-carrier symbol stream, which is then provided to the receiving processor 1556. The receiving processor 1556 and the multi-antenna receiving processor 1558 perform various signal processing functions of the L1 layer. The multi-antenna receiving processor 1558 performs a receive analog precoding/beamforming operation on the baseband multi-carrier symbol stream from the receiver 1554. The receiving processor 1556 uses a fast Fourier transform to convert the baseband multi-carrier symbol stream (after the receive analog precoding /beamforming operation) from the time domain to the frequency domain. In the frequency domain, the physical layer data signals and reference signal are demultiplexed by the receiving processor 1556, where the reference signals are configured to perform channel estimation. After multi-antenna detection in the multi-antenna receiving processor 1558, the data signals are recovered to obtain any spatial stream destined for the first communication device 1550. The symbols on each spatial stream are demodulated and recovered in the receiving processor 1556, and soft decisions are generated. The receiving processor 1556 then decodes and deinterleaves the soft decisions to recover the upper layer data and control signals transmitted by the second communication device 1510 on the physical channel. The upper layer data and control signals are then provided to the controller/processor 1559. The controller/processor 1559 performs L2 layer functions. The controller/processor 1559 may be associated with a memory 1560 that stores program code and data. The memory 1560 may be referred to as a computer-readable medium. In the transmission from the second communication device 1510 to the first communication device 1550, the controller/processor 1559 provides demultiplexing between transport and logical channels, packet reassembly, decryption, header decompression, and control signal processing to recover the upper layer data packets from the second communication device 1510. The upper layer data packets are then provided to all protocol layers above the L2 layer. Various control signals may also be provided to L3 layer for L3 processing.

In the transmission from the first communication device 1550 to the second communication device 1510, at the first communication device 1550, upper layer packets are provided to the controller/processor 1559 using a data source 1567. The data source 1567 represents all protocol layers above the L2 layer. Similar to the transmission functions at the second communication device 1510 described in the transmission from the second communication device 1510 to the first communication device 1550, the controller/processor 1559 performs header compression, encryption, packet segmentation and reordering, and multiplexing between logical and transport channels, implementation of L2 layer functions for user planes and control planes. The controller/processor 1559 is also responsible for the retransmission of lost packets, and signaling to the second communication device 1510. The transmitting processor 1568 performs modulation mapping, and channel coding processing. The multi-antenna transmitting processor 1557 performs digital multi-antenna spatial precoding (including codebook-based precoding and non-codebook-based precoding) and beamforming processing. Subsequently, the transmitting processor 1568 modulates the generated spatial stream into a multi-carrier/single-carrier symbol stream, which is subjected to analog precoding/ beamforming operations in the multi-antenna transmitting processor 1557 before being provided to different antennas 1552 via the transmitter 1554. Each transmitter 1554 first converts the baseband symbol stream provided by the multi-antenna transmitting processor 1557 into a radio frequency symbol stream, and then provides the stream to the antenna 1552.

In the transmission from the first communication device 1550 to the second communication device 1510, the function at the second communication device 1510 is similar to the receiving function at the first communication device 1550 described in the transmission from the second communication device 1510 to the first communication device 1550. Each receiver 1518 receives a radio frequency signal through its respective antenna 1520, converts the received radio frequency signal into a baseband signal, and provides the baseband signal to the multi-antenna receiving processor 1572 and the receiving processor 1570. The receiving processor 1570 and the multi-antenna receiving processor 1572 jointly implement the functions of the L1 layer. The controller/processor 1575 performs L2 layer functions. The controller/processor 1575 may be associated with a memory 1576 that stores program code and data. The memory 1576 may be referred to as a computer-readable medium. In the transmission from the first communication device 1550 to the second communication device 1510, the controller/processor 1575 provides demultiplexing between transport and logical channels, packet reassembly, decryption, header decompression, and control signal processing to recover the upper layer data packets from the first communication device 1550. The upper layer data packets from the controller/processor 1575 may be provided to the core network or all protocol layers above L2 layer, and may also provide various control signals to the core network or L3 layer for L3 processing.

In some embodiments, the first communication device 1550 includes: at least one processor and at least one memory, the at least one memory including computer program code. The at least one memory and the computer program code are configured to be used with the at least one processor, the first communication device 1550 is configured to at least: receive a first TAC in a first slot, the first TAC being used for determining a first uplink timing adjustment, and a first condition is used for determining whether the first uplink timing adjustment is used for a first uplink transmission. The first PRACH transmission includes a plurality of preamble repetitions, and the first uplink transmission includes at least one preamble repetition of the plurality of preamble repetitions of the first PRACH transmission.

In some embodiments, the first communication device 1550 includes: a memory that stores computer-readable program instructions that, when executed by at least one processor, causes actions to be performed, the actions including: receiving a first TAC in a first slot, the first TAC being used for determining a first uplink timing adjustment, and a first condition is used for determining whether the first uplink timing adjustment is used for a first uplink transmission. The first PRACH transmission includes a plurality of preamble repetitions, and the first uplink transmission includes at least one preamble repetition of the plurality of preamble repetitions of the first PRACH transmission.

In some embodiments, the first communication device 1550 corresponds to the first node in the present disclosure.

In some embodiments, the second communication device 1510 corresponds to the second node in the present disclosure.

In some embodiments, the first communication device 1550 is a user equipment, which may be used as a relay node.

In some embodiments, the first communication device 1550 is a user equipment supporting V2X, which may be used as a relay node.

In some embodiments, the first communication device 1550 is a user equipment supporting D2D, and the user device may be used as a relay node.

In some embodiments, the first communication device 1550 is a network control relay (NCR).

In some embodiments, the first communication device 1550 is a relay wireless repeater.

In some embodiments, the first communication device 1550 is a relay.

In some embodiments, the second communication device 1510 is a base station.

In some embodiments, the antenna 1552, the receiver 1554, the multi-antenna receiving processor 1558, the receiving processor 1556, and the controller/processor 1559 are configured to receive a first TAC in a first slot.

In some embodiments, the antenna 1520, the transmitter 1518, the multi-antenna transmitting processor 1571, the transmitting processor 1515, and the controller/processor 1575 are configured to transmit a first TAC in a first slot.

The embodiments of the present disclosure further provide a computer readable storage medium for storing program. The computer-readable storage medium may be applied to a terminal or a network device provided by an embodiment of the present disclosure, and the program causes the computer to implement the method performed by the terminal or the network device in each embodiment of the present disclosure.

The embodiments of the present disclosure further provide a computer program product. The computer program product includes a program. The computer program product may be applied to a terminal or a network device provided by an embodiment of the present disclosure, and the program causes the computer to implement the method implemented by the terminal or the network device in each embodiment of the present disclosure.

The embodiments of the present disclosure further provide a computer program. The computer program may be applied to the terminal or network device provided by the embodiments of the present disclosure, and the computer program causes the computer to implement the method executed by the terminal or network device in each embodiment of the present disclosure.

It should be understood that the terms "system" and "network" in the present disclosure may be used interchangeably. In addition, the terms used in the present disclosure are only configured to explain the specific embodiments of the present disclosure, and are not intended to limit the present disclosure. The terms "first", "second", "third", "fourth", and the like in the specification, claims, and drawings of the present disclosure are configured to distinguish between different objects, rather than to describe a specific order. In addition, the terms "comprise" and "have" and any variations thereof are intended to cover a non-exclusive inclusion.

In the embodiments of the present disclosure, "indicate" mentioned herein may refer to a direct indication, or may refer to an indirect indication, or may mean that there is an association relationship. For example, A indicating B, may mean that A directly indicates B, for example, B may be obtained by means of A; or may mean that A indirectly indicates B, for example, A indicates C, and B may be obtained by means of C; or may mean that there is an association relationship between A and B.

In the embodiments of the present disclosure, "B corresponding to A" means that B is associated with A, and B may be determined based on A. However, it should also be understood that, determining B based on A does not mean determining B based only on A, but instead B may be determined based on A and/or other information.

In the embodiments of the present disclosure, the term "corresponding" may mean that there is a direct or indirect correspondence between the two, or may mean that there is an association relationship between the two, or may mean that there is a relationship such as indicating and being indicated, or configuring and being configured.

In the embodiments of the present disclosure, "predefined" or "pre-configured" may be implemented by pre-storing corresponding codes, tables, or other forms that may be configured to indicate related information in devices (for example, including the terminal device and the network device), and a specific implementation thereof is not limited in the present disclosure. For example, pre-defined may refer to defined in the protocol.

In the embodiments of the present disclosure, the "protocol" may refer to a standard protocol in the communication field, and may include, for example, an LTE protocol, an NR protocol, and a related protocol applied to a future communications system, which is not limited in the present disclosure.

In the embodiments of the present disclosure, the term "and/or" is merely configured to describe an association relationship between associated objects, indicating that there may be three relationships. For example, A and/or B may indicate that: only A exists, both A and B exist, and only B exists. In addition, the character "/" herein generally indicates an "or" relationship between the associated objects.

In the embodiments of the present disclosure, sequence numbers of the foregoing processes do not mean execution sequences. The execution sequences of the processes should be determined according to functions and internal logic of the processes, and should not be construed as any limitation on the implementation processes of the embodiments of the present disclosure.

In several embodiments provided in the present disclosure, it should be understood that, the disclosed system, device, and method may be implemented in other manners. For example, the described device embodiments are merely examples. For example, the unit division is merely logical function division and may be other division in actual implementation. For example, multiple units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electrical, mechanical, or other forms.

The units described as separate parts may or may not be physically separate, and parts displayed as units may or may not be physical units, may be located in one position, or may be distributed on multiple network units. Some or all of the units may be selected according to an actual need to achieve the objectives of the solutions of the embodiments.

In addition, function units in the embodiments of the present disclosure may be integrated into one processing unit, or each of the units may exist alone physically, or two or more units are integrated into one unit.

All or some of the foregoing embodiments may be implemented by using software, hardware, firmware, or any combination thereof. When software is configured to implement embodiments, the foregoing embodiments may be implemented completely or partially in a form of a computer program product. The computer program product includes one or more computer instructions. When the computer program instructions are loaded and executed on a computer, the procedures or functions according to the embodiments of the present disclosure are completely or partially generated. The computer may be a general-purpose computer, a dedicated computer, a computer network, or another programmable apparatus. The computer instructions may be stored in a computer-readable storage medium or transmitted from one computer-readable storage medium to another computer-readable storage medium. For example, the computer instructions may be transmitted from a website, computer, server, or data center to another website, computer, server, or data center in a wired (such as a coaxial cable, an optical fiber, and a digital subscriber line (DSL)) manner or a wireless (such as infrared, wireless, and microwave) manner. The computer-readable storage medium may be any usable medium readable by the computer, or a data storage device, such as a server or a data center, integrating one or more usable media. The usable medium may be a magnetic medium (for example, a floppy disk, a hard disk, or a magnetic tape), an optical medium (for example, a digital versatile disc (DVD)), a semiconductor medium (for example, a solid-state drive (SSD)), or the like.

It should be understood by those skilled in the art that all or part of the operations of the above-described methods may be instructed by programs to be executed by corresponding hardware. Such programs may be stored in a computer-readable storage medium, e.g., a read-only memory, a hard disk, or an optical disc. Alternatively, all or part of the operations of the above-described embodiments may also be implemented using one or more integrated circuits. Correspondingly, each module unit described in the above embodiments may be implemented in hardware or in the form of a software functional module. The present disclosure is not limited to any particular combination of software and hardware. The first node described in the present disclosure includes, but is not limited to, wireless communication devices such as mobile phones, tablet computers, notebook computers, internet access cards, low-power devices, enhanced machine-type communication (eMTC) devices, narrowband Internet of Things (NB-IoT) devices, in-vehicle communication devices, aircraft, airplanes, unmanned aerial vehicles, and remotely piloted aircraft. The second node described in the present disclosure includes, but is not limited to, wireless communication devices such as mobile phones, tablet computers, notebook computers, internet access cards, low-power devices, eMTC devices, NB-IoT devices, in-vehicle communication devices, aircraft, airplanes, unmanned aerial vehicles, and remotely piloted aircraft. The user equipment, UE or terminal described in the present disclosure includes, but is not limited to, wireless communication devices such as mobile phones, tablet computers, notebook computers, internet access cards, low-power devices, eMTC devices, NB-IoT devices, in-vehicle communication devices, aircraft, airplanes, UAVs, and remotely piloted aircraft. The base station device, base station, or network-side device described in the present disclosure includes, but is not limited to, wireless communication devices such as macro base stations, micro base stations, home base stations, relay base stations, eNBs, gNBs, TRPs, global navigation satellite systems (GNSS), relay satellites, satellite base stations, and aerial base stations.

The foregoing descriptions are merely specific implementations of the present disclosure, but the protection scope of the present disclosure is not limited thereto. Any variation or replacement readily figured out by a person skilled in the art within the technical scope disclosed in the present disclosure shall fall within the protection scope of the present disclosure. Therefore, the protection scope of the present disclosure shall be subject to the protection scope of the claims.

## Claims

1. A method in a first node for wireless communication, comprising:
receiving a first timing advance command (TAC) on a first slot,
wherein the first TAC is used for determining a first uplink timing adjustment, a first condition is used for determining whether the first uplink timing adjustment is used for a first uplink transmission, a first physical random access channel (PRACH) transmission comprises a plurality of preamble repetitions, and the first uplink transmission comprises at least one preamble repetition of the plurality of preamble repetitions of the first PRACH transmission.

2. The method according to claim 1, wherein the first uplink timing adjustment is applied to a start of a first effective slot, and the first condition is related to the first effective slot.

3. The method according to claim 1 or 2, wherein the first uplink timing adjustment is further used for a second uplink transmission, and the second uplink transmission comprises at least one of a first physical uplink shared channel (PUSCH) transmission, a first sound reference signal (SRS) transmission, or a first physical uplink control channel (PUCCH) transmission.

4. The method according to any one of claims 1 to 3, further comprising:
transmitting the at least one preamble repetition in the first PRACH transmission on a first random access channel occasion (RO) set;
wherein the first RO set comprises a plurality of PRACH occasions, the plurality of PRACH occasions are respectively used for the plurality of preamble repetitions in the first PRACH transmission, and the first condition comprises whether a first effective slot is within a time-domain range occupied by the plurality of PRACH occasions.

5. The method according to claim 4, wherein the first slot is used for determining the first effective slot, and the first effective slot overlaps with at least one PRACH occasion in the first RO set.

6. The method according to claim 4 or 5, wherein the first effective slot is a sum of the first slot and a first delay.

7. The method according to any one of claims 4 to 6, wherein,
in response to the first effective slot being within the time-domain range occupied by the plurality of PRACH occasions, the first uplink timing adjustment is not used for the first uplink transmission; and
in response to the first effective slot being before the time-domain range occupied by the plurality of PRACH occasions, the first uplink timing adjustment is used for the first uplink transmission.

8. The method according to any one of claims 4 to 7, further comprising:
maintaining a transmission timing of the first uplink transmission, wherein the first effective slot is within the time-domain range occupied by the plurality of PRACH occasions.

9. The method according to any one of claims 4 to 7, further comprising:
dropping the at least one preamble repetition comprised in the first uplink transmission, wherein the first effective slot is within the time-domain range occupied by the plurality of PRACH occasions.

10. The method according to any one of claims 1 to 9, further comprising:
receiving a first random access response (RAR) within a first time window, wherein the first RAR comprises a second TAC;
wherein the at least one preamble repetition is transmitted on a first random access channel occasion (RO) set, a last PRACH occasion in the first RO set is used for determining a start of the first time window, and the second TAC is related to any of the at least one preamble repetition.

11. A method in a second node for wireless communication, comprising:
transmitting a first timing advance command (TAC) on a first slot,
wherein the first TAC is used for determining a first uplink timing adjustment, a first condition is used for determining whether the first uplink timing adjustment is used for a first uplink transmission, a first physical random access channel (PRACH) transmission comprises a plurality of preamble repetitions, and the first uplink transmission comprises at least one preamble repetition of the plurality of preamble repetitions of the first PRACH transmission.

12. The method according to claim 11, wherein the first uplink timing adjustment is applied to a start of a first effective slot, and the first condition is related to the first effective slot.

13. The method according to claim 11 or 12, wherein the first uplink timing adjustment is further used for a second uplink transmission, and the second uplink transmission comprises at least one of a first physical uplink shared channel (PUSCH) transmission, a first sound reference signal (SRS) transmission, or a first physical uplink control channel (PUCCH) transmission.

14. The method according to any one of claims 11 to 13, further comprising:
receiving the at least one preamble repetition in the first PRACH transmission on a first random access channel occasion (RO) set;
wherein the first RO set comprises a plurality of PRACH occasions, the plurality of PRACH occasions are respectively used for the plurality of preamble repetitions in the first PRACH transmission, and the first condition comprises whether a first effective slot is within a time-domain range occupied by the plurality of PRACH occasions.

15. The method according to claim 14, wherein the first slot is used for determining the first effective slot, and the first effective slot overlaps with at least one PRACH occasion in the first RO set.

16. The method according to claim 14 or 15, wherein the first effective slot is a sum of the first slot and a first delay.

17. The method according to any one of claims 14 to 16, wherein,
in response to the first effective slot being within the time-domain range occupied by the plurality of PRACH occasions, the first uplink timing adjustment is not used for the first uplink transmission; and
in response to the first effective slot being before the time-domain range occupied by the plurality of PRACH occasions, the first uplink timing adjustment is used for the first uplink transmission.

18. The method according to any one of claims 11 to 17, further comprising:
transmitting a first random access response (RAR) within a first time window, wherein the first RAR comprises a second TAC;
wherein the at least one preamble repetition is transmitted on a first random access channel occasion (RO) set, a last PRACH occasion in the first RO set is used for determining a start of the first time window, and the second TAC is related to any of the at least one preamble repetition.

19. A first node for wireless communication, comprising:
a first receiver, configured to receive a first timing advance command (TAC) on a first slot,
wherein the first TAC is used for determining a first uplink timing adjustment, a first condition is used for determining whether the first uplink timing adjustment is used for a first uplink transmission; a first physical random access channel (PRACH) transmission comprises a plurality of preamble repetitions, and the first uplink transmission comprises at least one preamble repetition of the plurality of preamble repetitions of the first PRACH transmission.

20. The first node according to claim 19, wherein the first uplink timing adjustment is applied to a start of a first effective slot, and the first condition is related to the first effective slot.

21. The first node according to claim 19 or 20, wherein the first uplink timing adjustment is further used for a second uplink transmission, and the second uplink transmission comprises at least one of a first physical uplink shared channel (PUSCH) transmission, a first sound reference signal (SRS) transmission, or a first physical uplink control channel (PUCCH) transmission.

22. The first node according to any one of claims 19 to 21, further comprising:
a first transmitter, configured to transmit the at least one preamble repetition in the first PRACH transmission on a first random access channel occasion (RO) set;
wherein the first RO set comprises a plurality of PRACH occasions, the plurality of PRACH occasions are respectively used for the plurality of preamble repetitions in the first PRACH transmission, and the first condition comprises whether a first effective slot is within a time-domain range occupied by the plurality of PRACH occasions.

23. The first node according to claim 22, wherein the first slot is used for determining a first effective slot, and the first effective slot overlaps with at least one PRACH occasion in the first RO set.

24. The first node according to claim 22 or 23, wherein the first effective slot is a sum of the first slot and a first delay.

25. The first node according to any one of claims 22 to 24, wherein,
in response to the first effective slot being within the time-domain range occupied by the plurality of PRACH occasions, the first uplink timing adjustment is not used for the first uplink transmission; and
in response to the first effective slot being before the time-domain range occupied by the plurality of PRACH occasions, the first uplink timing adjustment is used for the first uplink transmission.

26. The first node according to any one of claims 22 to 25, further comprising:
a first processor, configured to maintain a transmission timing of the first uplink transmission,
wherein the first effective slot is within the time-domain range occupied by the plurality of PRACH occasions.

27. The first node according to any one of claims 22 to 25, further comprising:
a second processor, configured to drop the at least one preamble repetition comprised in the first uplink transmission,
wherein the first effective slot is within the time-domain range occupied by the plurality of PRACH occasions.

28. The first node according to any one of claims 19 to 27, wherein the first receiver is further configured to receive a first random access response (RAR) within a first time window, wherein the first RAR comprises a second TAC;
wherein the at least one preamble repetition is transmitted on a first random access channel occasion (RO) set, a last PRACH occasion in the first RO set is used for determining a start of the first time window, and the second TAC is related to any of the at least one preamble repetition.

29. A second node for wireless communication, comprising:
a second transmitter, configured to transmit a first timing advance command (TAC) on a first slot;
wherein the first TAC is used for determining a first uplink timing adjustment, a first condition is used for determining whether the first uplink timing adjustment is used fora first uplink transmission; a first physical random access channel (PRACH) transmission comprises a plurality of preamble repetitions, and the first uplink transmission comprises at least one preamble repetition of the plurality of preamble repetitions of the first PRACH transmission.

30. The second node according to claim 29, wherein the first uplink timing adjustment is applied to a start of the first effective slot, and the first condition is related to the first effective slot.

31. The second node according to claim 29 or 30, wherein the first uplink timing adjustment is further used for a second uplink transmission, and the second uplink transmission comprises at least one of a first physical uplink shared channel (PUSCH) transmission, a first sound reference signal (SRS) transmission, or a first physical uplink control channel (PUCCH) transmission.

32. The second node according to any one of claims 29 to 31, further comprising:
a second receiver, configured to receive the at least one preamble repetition in the first PRACH transmission on a first random access channel occasion (RO) set;
wherein the first RO set comprises a plurality of PRACH occasions, the plurality of PRACH occasions are respectively used for the plurality of preamble repetitions in the first PRACH transmission, and the first condition comprises whether a first effective slot is within a time-domain range occupied by the plurality of PRACH occasions.

33. The second node according to claim 32, wherein the first slot is used for determining the first effective slot, and the first effective slot overlaps with at least one PRACH occasion in the first RO set.

34. The second node according to claim 32 or 33, wherein the first effective slot is a sum of the first slot and a first delay.

35. The second node according to any one of claims 32 to 34, wherein,
in response to the first effective slot being within the time-domain range occupied by the plurality of PRACH occasions, the first uplink timing adjustment is not used for the first uplink transmission; and
in response to the first effective slot being before the time-domain range occupied by the plurality of PRACH occasions, the first uplink timing adjustment is used for the first uplink transmission.

36. The second node according to any one of claims 29 to 35, wherein the second transmitter is further configured to transmit a first RAR within a first time window, wherein the first RAR comprises a second TAC;
wherein at least one preamble repetition is transmitted on a first random access channel occasion (RO) set, a last PRACH occasion in the first RO set is used for determining a start of the first time window, and the second TAC is related to any of the at least one preamble repetition.

37. A node for wireless communication, comprising: a transceiver, a memory, and a processor, wherein the memory is configured to store programs, and the processor is configured to call the programs in the memory and control the transceiver to receive or send a signal to cause the node to implement the method according to any one of claims 1 to 10 or implement the method according to any one of claims 11 to 18.

38. A device, comprising: a processor configured to call a program from a memory to cause the device to implement the method according to any one of claims 1 to 10 or implement the method according to any one of claims 11 to 18.

39. A chip, comprising: a processor configured to call a program from a memory, so that a device installed with the chip implements the method according to any one of claims 1 to 10 or implements the method according to any one of claims 11 to 18.

40. A computer-readable storage medium, wherein a program is stored thereon, and the program, when executed by a computer, causes the computer to implement the method according to any one of claims 1 to 10 or implement the method according to any one of claims 11 to18.

41. A computer program product, comprising a program, wherein the program, when executed by a computer, causes the computer to implement the method according to any one of claims 1 to 10 or implement the method according to any one of claims 11 to 18.

42. A computer program, wherein the computer program, when executed by a computer, causes the computer to implement the method according to any one of claims 1 to 10 or implement the method according to any one of claims 11 to 18.
